# EUROPEAN PATENT APPLICATION

(11) **EP 2 204 429 A1**
(43) Date of publication of application: **07.07.2010**
(21) Application number: 08833754.8
(22) Date of filing: 26.09.2008
(51) Int. Cl.: C09K 3/18, C08L 33/16, C08L 101/04, D06M 15/277

(54) **A WATER-AND-OIL REPELLANT COMPOSITION AND ARTICLE**

(30) Priority: 28.09.2007 JP 2007254696
(71) Applicant: Asahi Glass Company, Limited, Chiyoda-ku Tokyo 100-8405 (JP)
(72) Inventor: SUGIYAMA, Kazunori, Tokyo 100-8405 (JP); OOMORI, Yuuichi, Tokyo 100-8405 (JP); SHIMADA, Minako, Tokyo 100-8405 (JP)
(74) Representative: Müller-Boré & Partner Patentanwälte
(86) International application number: PCT/JP2008/067543
(87) International publication number: WO 2009/041648

(57) **Abstract**

To provide a water/oil repellent composition which can impart water/oil repellency with excellent friction durability to a surface of an article, even though while having structural units based on a monomer having an R^{f} group having at most 6 carbon atoms, structural units based on a monomer having an R^{f} group having at least 8 carbon atoms are reduced as much as possible, and an article which has little impact on environment and is less susceptible to deterioration of water/oil repellency by friction.

A water/oil repellent composition which comprises polymer (A) having units of monomer (a) and units of monomer (b), having no units of monomer (c) and having at least 15 mass% and less than 45 mass% of fluorine atoms, and polymer (B) having units of monomer (a), having no units of monomer (c) and having at least 45 mass% of fluorine atoms: monomer (a): a monomer having a C₄₋₆ R^{f} group; monomer (b): a monomer having an alkyl group having at least 12 carbon atoms, vinyl chloride or vinylidene chloride; monomer (c): a monomer having R^{f} group having at least 8 carbon atoms.

## Description

### TECHNICAL FIELD

The present invention relates to a water/oil repellent composition and an article treated with the water/oil repellent composition.

### BACKGROUND ART

A method of treating an article (e.g. a fiber product) with a water/oil repellent composition comprising an emulsion having a polymer, which has structural units based on a monomer having a polyfluoroalkyl group (hereinafter referred to as R^{f} group) having at least 8 carbon atoms, dispersed in a medium is known as a method for imparting water/oil repellency to a surface of the article.

However, recently EPA (United States Environmental Protection Agency) has pointed out that a compound having a perfluoroalkyl group (hereinafter referred to as R^{F} group) having at least 8 carbon atoms is decomposed in an environment or a living body and its decomposition product is accumulated there, which means that such a compound has a major impact on environment (See paragraph [0007] of Patent Document 2). Accordingly, a polymer for water/oil repellent composition, which has structural units based on a monomer having an R^{f} group having at most 6 carbon atoms and has structural units based on a monomer having an R^{f} group having at least 8 carbon atoms reduced as much as possible, is required.

As water/oil repellent compositions containing such a polymer, the following water/oil repellent compositions have, for example, been proposed.
(1) a water/oil repellent composition containing, as an essential component, a copolymer which consists essentially of structural units based on following monomer (a) and structural units based on following monomer (b) (Patent Document 1):
   monomer (a): e.g. a monomer which has an R^{F} group having at most 6 carbon atoms;
   monomer (b): e.g. a (meth)acrylate which has an alkyl group having at least 15 carbon atoms.
(2) a water/oil repellent composition comprising a polymer having structural units based on the following monomer (a¹) and a polymer having structural units based on the following monomer (a²) (Patent Document 2):
   monomer (a¹): e.g. a (meth)acrylate which has an R^{F} group having at most 6 carbon atoms , and of which the homopolymer has a glass transition temperature (hereinafter referred to as Tg) of at least 50°C;
   monomer (a²): e.g. a (meth)acrylate which has an R^{F} group having at most 6 carbon atoms, and of which the homopolymer has a Tg of lower than 50°C.

However, an article treated with such a water/oil repellent composition (1) or (2) has a problem such that the water/oil repellency is likely to deteriorate by friction because the polymer contained therein has structural units based on a monomer having an R^{f} group having at most 6 carbon atoms and has no structural units based on a monomer having R^{f} group having at least 8 carbon atoms.
Patent Document 1: WO 02/083809
Patent Document 2: WO 2006/038493

### DISCLOSURE OF THE INVENTION

### OBJECT TO BE ACCOMPLISHED BY THE INVENTION

The present invention is to provide a water/oil repellent composition which can impart water/oil repellency with excellent friction durability to a surface of an article, even though while having structural units based on a monomer having an R^{f} group having at most 6 carbon atoms, structural units based on a monomer having an R^{f} group having at least 8 carbon atoms are reduced as much as possible, and an article which has little impact on environment and is less susceptible to deterioration of water/oil repellency by friction.

### MEANS TO ACCOMPLISH THE OBJECT

The water/oil repellent composition of the present invention is characterized in that it comprises polymer (A) and polymer (B), wherein polymer (A) has structural units based on the following monomer (a) and structural units based on the following monomer (b), has no structural units based on the following monomer (c) and has at least 15 mass% and less than 45 mass% of fluorine atoms in polymer (A) (100 mass%), and polymer (B) has structural units based on the following monomer (a) and has no structural units based on the following monomer (c) and has at least 45 mass% of fluorine atoms in polymer (B) (100 mass%):
monomer (a): a monomer which has an R^{f} group having from 4 to 6 carbon atoms to which fluorine atoms are bonded, provided that the R^{f} group may have an etheric oxygen atom;
monomer (b): at least one monomer selected from the group consisting of the following monomer (b1), monomer (b2) and monomer (b3):
   monomer (b1): a monomer which has no R^{f} group and has an alkyl group having at least 12 carbon atoms;
   monomer (b2): vinyl chloride; and
   monomer (b3): vinylidene chloride; and
monomer (c): a monomer which has an R^{f} group having at least 8 carbon atoms to which fluorine atoms are bonded and having at least 60% of hydrogen atoms of the alkyl group substituted by fluorine atoms.

The mass ratio of the polymer (A) to the polymer (B) ((A) / (B)) is preferably from 10/90 to 95/5.

The monomer (a) is preferably a (meth)acrylate having a C₄₋₆ R^{F} group.

The monomer (c) is preferably a (meth)acrylate having a C₈₋₁₆ R^{F} group.

The water/oil repellent composition of the present invention preferably further contains polymer (C) having structural units based on the monomer (c) and having at least 15 mass% of fluorine atoms in polymer (C) (100 mass%).

The mass ratio of the sum of the polymer (A) and the polymer (B) to the polymer (C) ({(A)+(B)} / (C)) is preferably from 99.9/0.1 to 90/10.
The polymer (A) preferably further has structural units based on the following monomer (d):
monomer (d): a monomer having no R^{f} group and having a crosslinkable functional group.

The polymer (A) preferably satisfies the following conditions (i) to (iii):
(i) it is a multistage polymer obtained by polymerizing the following monomer component (X1) in a medium in the presence of a surfactant and a polymerization initiator, followed by polymerizing the following monomer component (X2);
   monomer component (X1): a monomer component comprising from 65 to 95 mass% of the monomer (a) and from 1 to 35 mass% of the monomer (b1) in monomer component (X1) (100 mass%); and
   monomer component (X2): a monomer component comprising from 25 to 80 mass% of the monomer (a) and from 1 to 50 mass% of the monomer (d) in monomer component (X2) (100 mass%);
(ii) the difference between proportion [a1] (mass%) of the monomer (a) in the monomer component (X1) (100 mass%) and proportion [a2] (mass%) of the monomer (a) in the monomer component (X2) (100 mass%), i.e. ([a1] - [a2]), is at least 10 mass%; and
(iii) the mass ratio of the monomer component (X1) to the monomer component (X2) ((X1)/(X2)) is from 10/90 to 95/5.

The article of the present invention is an article treated with the water/oil repellent composition of the present invention.

### EFFECTS OF THE INVENTION

The water/oil repellent composition can impart water/oil repellency with excellent friction durability to a surface of an article, even though while having structural units based on a monomer having an R^{f} group having at most 6 carbon atoms, structural units based on a monomer having an R^{f} group having at least 8 carbon atoms are reduced as much as possible.

The article of the present invention has little impact on environment and is less susceptible to deterioration of water/oil repellency by friction.

### BEST MODE FOR CARRYING OUT THE INVENTION

In this specification, a compound represented by the formula (1) is referred to as compound (1). The same applies to compounds represented by other formulae. And, in this specification, a group represented by the formula (2) is referred to as group (2). The same applies to groups represented by in other formulae. And, a (meth)acrylate in this specification means an acrylate or a methacrylate. And, a monomer in this specification means a compound having a polymerizable unsaturated group. In addition, in this specification, an R^{f} group is an alkyl group having all or some of its hydrogen atoms substituted by fluorine atoms, and an R^{F} group is an alkyl group having all of its hydrogen atoms substituted by fluorine atoms.

### <Water/oil repellent composition>

The water/oil repellent composition of the present invention comprises polymer (A) and polymer (B) as essential components, further contains polymer (C), a medium, a surfactant and an additive, as required.

### (Polymer (A))

Polymer (A) is a copolymer having structural units based on monomer (a) and structural units based on monomer (b) as essential structural units, having no structural units based on monomer (c), and further having structural units based on monomer (d) and structural units based on monomer (e), as required.

The proportion of fluorine atoms in polymer (A) (100 mass%) is at least 15 mass% and less than 45 mass%. The proportion of fluorine atoms in polymer (A) (100 mass%) is preferably at least 25 mass%, more preferably at least 30 mass%. Monomer (a):
Monomer (a) is a monomer having an R^{f} group having from 4 to 6 carbon atoms to which fluorine atoms are bonded, provided that the R^{f} group may have an etheric oxygen atom.

As monomer (a), compound (1) may, for example, be mentioned.

(Z-Y)ₙX (1)

wherein Z is an R^{f} group having from 4 to 6 carbon atoms (provided that R^{f} group may have an etheric oxygen atom), or group (2).

CᵢF₂ᵢ₊₁O(CFX¹CF₂O)ⱼCFX²- (2)

wherein i is an integer of from 1 to 6, j is an integer of from 0 to 10, and each of X¹ and X² which are independent of each other, is a fluorine atom or a trifluoromethyl group.

The R^{f} group is preferably an R^{F} group. The R^{f} group may have a straight chain structure or branched structure, preferably a straight chain structure.

The following groups may be mentioned as examples of Z:
F(CF₂)₄-,
F(CF₂)₅-,
F(CF₂)₆-,
(CF₃)₂CF(CF₂)₂-,
CₖF₂ₖ₊₁O[CF(CF₃)CF₂O]ₕ-CF(CF₃)-, etc.:
   wherein k is an integer of from 1 to 6, and h is an integer of from 0 to 10.
Y is a bivalent organic group or a single bond.

The bivalent organic group is preferably an alkylene group. The alkylene group may have a straight chain structure or branched structure. The alkylene group may have -O-, -NH-, -CO-, -SO₂-, -CD¹=CD²- (wherein each of D¹ and D² which are independent of each other, is a hydrogen atom or a methyl group), etc.

The following groups may be mentioned as examples of Y:
- CH₂-,
- CH₂CH₂-,
- (CH₂)₃-,
- CH₂CH₂CH(CH₃)-,
- CH=CH-CH₂-, etc.
   n is 1 or 2.
   X is one of groups (3-1) to (3-5) when n is 1, and one of groups (4-1) to (4-4) when n is 2;
- CR=CH₂ (3-1)
- COOCR=CH₂ (3-2)
- OCOCR=CH₂ (3-3)
- OCH₂-ϕ-CR=CH₂ (3-4)
- OCH=CH₂ (3-5)
   where R is a hydrogen atom, a methyl group or a halogen atom and ϕ is a phenylene group;
- CH[-(CH₂)ₘCR=CH₂]- (4-1)
- CH[-(CH₂)ₘCOOCR=CH₂]- (4-2)
- CH[-(CH₂)ₘOCOCR=CH₂]- (4-3)
- OCOCH=CHCOO- (4-4)
   where R is a hydrogen atom, a methyl group or a halogen atom and m is an integer of from 0 to 4.

From a viewpoint of the polymerizability with other monomers, flexibility of a film of the polymer, adherence property of the polymer to an article, solubility in a medium, ease of emulsion polymerization, etc., compound (1) is preferably a (meth)acrylate having a C₄₋₆ R^{F} group.

Compound (1) is preferably a compound of formula (1) wherein Z is a C₄₋₆ R^{F} group, Y is a C₁₋₄ alkylene group, n is 1, and X is group (3-3).
Monomer (b):
   Monomer (b) is at least one monomer selected from the group consisting of monomer (b1), monomer (b2) and monomer (b3).
   Polymer (A) has structural units based on monomer (b), whereby the friction durability is improved.
Monomer (b1):
   Monomer (b1) is a monomer having no R^{f} group and having an alkyl group having at least 12 carbon atoms. When the alkyl group has at least 12 carbon atoms, the friction durability is improved.
   Monomer (b1) may, for example, be a (meth)acrylate, a vinyl ether or a vinyl ester.
   Monomer (b1) is preferably a monomer having a C₁₂₋₃₆ alkyl group, more preferably a (meth)acrylate having a C₁₂₋₂₄ alkyl group, particularly preferably stearyl (meth)acrylate or behenyl (meth)acrylate.
Monomer (b2):
   Monomer (b2) is vinyl chloride.
Monomer (b3):
   Monomer (b3) is vinylidene chloride.
Monomer (c):
   Monomer (c) is a monomer having an R^{f} group having at least 8 carbon atoms to which fluorine atoms are bonded and having at least 60% of hydrogen atoms of the alkyl group substituted by fluorine atoms.
   Polymer (A) has no structural units based on monomer (c), whereby it has little impact on environment.
Monomer (d):
   Monomer (d) is a monomer having no R^{f} group and having a crosslinkable functional group.
   Polymer (A) has structural units based on monomer (d), whereby its friction durability is improved.

The crosslinkable functional group is preferably a functional group having at least one of a covalent bond, an ionic bond and a hydrogen bond, or a functional group which is capable of forming a crosslinked structure by interaction between such bonds.

Such a functional group is preferably an isocyanate group, a blocked isocyanate group, an alkoxysilyl group, an amino group, an alkoxymethylamide group, a silanol group, an ammonium group, an amide group, an epoxy group, a hydroxy group, an oxazoline group, a carboxy group, an alkenyl group, or a sulfonic acid group, particularly preferably an epoxy group, a hydroxy group, a blocked isocyanate group, a hydroxy group, an alkoxysilyl group, an amino group, or a carboxy group.

Monomer (d) is preferably a (meth)acrylate, a (meth)acrylamide, a vinyl ether or a vinyl ester.

The following compounds may be mentioned as examples of monomer (d):
2-isocyanatoethyl (meth)acrylate, 3-isocyanatopropyl (meth)acrylate, 4-isocyanatobutyl (meth)acrylate, a 2-butanone oxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanatopropyl (meth)acrylate, and a pyrazole adduct of 3-isocyanatopropyl (meth)acrylate;
a 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanone oxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, and an ε-caprolactam adduct of 4-isocyanatobutyl (meth)acrylate;
methoxymethyl (meth)acrylamide, ethoxymethyl (meth)acrylamide, butoxymethyl (meth)acrylamide, diacetone acrylamide, γ-methacryloyloxypropyltrimethoxysilane, trimethoxyvinylsilane, vinyltrimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyltrimethylammonium chloride, (meth)acryloyloxypropyltrimethylammonium chloride, (meth)acrylamideethyltrimethylammonium chloride, and (meth)acrylamidepropyltrimethylammonium chloride;
t-butyl(meth)acrylamide sulfonic acid, (meth)acrylamide, N-methyl(meth)acrylamide, N-methylol(meth)acrylamide, N-butoxymethyl(meth)acrylamide, diacetone(meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, a polyoxyalkylene glycol mono(meth)acrylate, (meth)acrylic acid, 2-(meth)acryloylxyethylsuccinic acid, 2-(meth)acryloylxyhexahydrophthalic acid, 2-(meth)acryloyloxyethyl acid phosphate, allyl (meth)acrylate, 2-vinyl-2-oxazoline, and a polycaprolactone ester of 2-vinyl-4-methyl-(2-vinyloxazoline)hydroxyethyl (meth)acrylate; and
tri(meth)allyl isocyanurate (T(M)AIC, manufactured by Nippon Kasei Chemical Co., Ltd.), triallyl cyanurate (TAC, manufactured by Nippon Kasei Chemical Co., Ltd.), phenylglycidylethylacrylate tolylenediisocyanate (AT-600,manufactured by KYOEISHA CHEMICAL Co., Ltd.), and 3-(methylethylketoxime)isocyanatomethyl-3,5,5-trimethylcyclohexyl(2-hydroxyethylmethacrylate)cyanate ((TECHCOAT HE-6P, manufactured by Kyoken Kasei).

Monomer (d) is preferably N-methylol(meth)acrylamide, N-butoxymethyl(meth)acrylamide, 2-hydroxyethyl (meth)acrylate, a 3,5-dimethylpyrazole adduct of 3-isocyanatopropyl (meth)acrylate, diacetone acrylamide, glycidyl methacrylate, a polycaprolactone ester of hydroxyethyl (meth)acrylate, AT-600 (manufactured by KYOEISHA CHEMICAL Co., Ltd.), or TECHCOAT HE-6P (manufactured by Kyoken Kasei).
Monomer (e):
   Monomer (e) is a monomer other than monomer (a), monomer (b), monomer (c), and monomer (d).

The following compounds may be mentioned as examples of monomer (e):
Methyl acrylate, ethyl acrylate, propyl acrylate, butyl methacrylate, cyclohexyl (meth)acrylate, 2-ethylhexyl (meth)acrylate, butyl methacrylate, n-hexyl (meth)acrylate, vinyl acetate, vinyl propionate, butene, isoprene, butadiene, ethylene, propylene, vinyl ethylene, pentene, ethyl-2-propylene, butylethylene, cyclohexylpropylethylene, decylethylene, dodecylethylene, hexene, isohexylethylene, neopentylethylene, (1,2-diethoxycarbonyl)ethylene, (1 ,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene, nonylstyrene, chloroprene, tetrafluoroethylene and vinylidene fluoride;
N,N,-dimethyl(meth)acrylamide, a vinylalkyl ether, an alkyl halide vinyl ether, a vinylalkyl ketone, butyl acrylate, propyl methacrylate, benzyl (meth)acrylate, octyl (meth)acrylate, decyl methacrylate, cyclododecyl acrylate, 3-ethoxypropyl acrylate, methoxy-butyl acrylate, 2-ethylbutyl acrylate, 1,3-dimethylbutyl acrylate, 2-methylpentyl acrylate, aziridinylethyl (meth)acrylate, a 2-ethylhexylpolyoxyalkylene (meth)acrylate and a polyoxyalkylene di(meth)acrylate; and
an alkyl crotonate, an alkyl maleate, an alkyl fumarate, an alkyl citraconate, an alkyl mesaconate, triallyl cyanurate, allyl acetate, N-vinylcarbazole, maleimide, N-methylmaleimide, a (meth)acrylate having a silicone in its side chain, a (meth)acrylate having an urethane bond, a (meth)acrylate having a polyoxy alkylene chain with a terminal C₁₋₄ alkyl group, an alkylene di(meth)acrylate, etc.

Polymer (A) may be produced by, for example, the following method:
A method comprising polymerizing monomer component (X) containing monomer (a) and monomer (b), not containing monomer (c) and containing monomer (d) and monomer (e) as required, in a medium in the presence of a surfactant and a polymerization initiator to obtain a solution, a dispersion or an emulsion of polymer (A).

The polymerization method may, for example, be dispersion polymerization, emulsion polymerization or suspension polymerization. And, the method may be single-stage polymerization or multistage polymerization.

The production method of polymer (A) preferably comprises emulsion polymerizing monomer component (X) containing monomer (a) and monomer (b), not containing monomer (c) and containing monomer (d) and monomer (e) as required, in an aqueous medium in the presence of a surfactant and a polymerization initiator to obtain a emulsion of polymer (A).

From the viewpoint of yield improvement of polymer (A), it is preferred that a mixture containing a monomer, a surfactant and an aqueous medium is pre-emulsified before emulsion polymerization. For example, a mixture containing a monomer, a surfactant and an aqueous medium is mixed and dispersed by a homomixer or a high-pressure emulsification equipment.

The polymerization initiator may, for example, be a thermal polymerization initiator, an optical polymerization initiator, a radiation polymerization initiator, a radical polymerization initiator, or an ionic polymerization initiator, and is preferably a watersoluble or oil-soluble radical polymerization initiator.

Common polymerization initiators such as an azo polymerization initiator, a peroxide polymerization initiator, a redox polymerization initiator, etc. are used as a radical polymerization initiator depending on the polymerization temperature. The radical polymerization initiator is particularly preferably an azo polymerization initiator, and the azo polymerization initiator is further preferably a salt of an azo compound when polymerization is carried out in an aqueous medium. The polymerization temperature is preferably between 20°C and 150°C.

The amount of polymerization initiator is preferably from 0.1 to 5 parts by mass, more preferably from 0.1 to 3 parts by mass, per 100 parts by mass of monomer component (X).

A molecular weight modifier may be used in the polymerization of the monomer component (X). The molecular weight modifier is preferably an aromatic compound, a mercapto alcohol a mercaptan, particularly preferably an alkylmercaptan. A specific example of the molecular weight modifier may be mercaptoethanol, n-octylmercaptan, n-dodecylmercaptan, t-dodecylmercaptan, stearylmercaptan, or α-methylstyrene dimer (CH₂=C(Ph)CH₂C(CH₃)₂Ph, wherein Ph is a phenyl group).

The amount of the molecular weight modifier is preferably from 0.01 to 5 parts by mass, more preferably from 0.1 to 3 parts by mass, per 100 parts by mass of monomer component (X).

The proportion of monomer (a) is preferably from 30 to 80 mass%, more preferably from 40 to 80 mass%, in monomer component (X) (100 mass%) from the viewpoint of water/oil repellency and friction durability.

The proportion of monomer (b) is preferably from 15 to 50 mass%, more preferably from 20 to 45 mass%, in monomer component (X) (100 mass%) from the viewpoint of water/oil repellency and friction durability.

The proportion of monomer (d) is preferably from 0 to 30 mass%, more preferably from 0.1 to 20 mass%, in monomer component (X) (100 mass%) from the viewpoint of water/oil repellency and friction durability.

The proportion of monomer (e) is preferably from 0 to 40 mass%, more preferably from 0 to 30 mass%, in monomer component (X) (100 mass%) from the viewpoint of water/oil repellency and friction durability.

As polymer (A), from the viewpoint of developing high water repellency, it is preferred that a polymer obtained by single-stage polymerization or a so-called core-shell structured polymer obtained by multistage polymerization. The structure of the polymer is not limited to a regular layer structure, and it may be a sea-island structure or a structure having a part of the polymer forming the outer layer localized.

The core-shell structured polymer is preferably a polymer satisfying the following conditions (i) to (iii):
(i) it is a multistage polymer obtained by polymerizing the following monomer component (X1) in a medium in the presence of a surfactant and a polymerization initiator, followed by polymerizing the following monomer component (X2);
   monomer component (X1): a monomer component comprising from 65 to 95 mass% of the monomer (a) and from 1 to 35 mass% of the monomer (b1) in monomer component (X1) (100 mass%); and
   monomer component (X2): a monomer component comprising from 25 to 80 mass% of the monomer (a) and from 1 to 50 mass% of the monomer (d) in monomer component (X2) (100 mass%);
(ii) the difference between proportion [a₁] (mass%) of the monomer (a) in the monomer component (X1) (100 mass%) and proportion [a₂] (mass%) of the monomer (a) in the monomer component (X2) (100 mass%), i.e. ([a₁] - [a₂]), is at least 10 mass%; and
(iii) the mass ratio of the monomer component (X1) to the monomer component (X2) ((X1)/(X2)) is from 10/90 to 95/5.

Condition (i):
The proportion of monomer (a) is from 65 to 95 mass%, preferably from 70 to 95 mass%, in monomer component (X1) (100 mass%) from the viewpoint of water/oil repellency and friction durability.

The proportion of monomer (b1) is from 1 to 35 mass%, preferably from 3 to 27 mass%, in monomer component (X1) (100 mass%) from the viewpoint of water/oil repellency and friction durability.

The proportion of monomer (a) is from 25 to 80 mass%, preferably from 30 to 75 mass%, in monomer component (X2) (100 mass%) from the viewpoint of water/oil repellency and friction durability.

The proportion of monomer (d) is from 1 to 50 mass%, preferably from 1 to 35 mass%, in monomer component (X2) (100 mass%) from the viewpoint of water/oil repellency and friction durability.
Condition (ii):
   [a₁]-[a₂] is at least 10 mass%, preferably at least 30 mass%, from the viewpoint of water/oil repellency and friction durability. In addition, [a₁]-[a₂] is preferably at most 80 mass%.

Monomer component (X1) may also contain a monomer other than monomer (a) or monomer (b1), e.g. monomer (d). In the case where monomer component (X1) contains such a monomer, the proportion of the monomer is preferably from 2 to 25 mass% in monomer component (X1) (100 mass%).

Monomer component (X2) may also contain a monomer other than monomer (a) or monomer (d). In the case where monomer component (X2) contains such a monomer, the proportion of the monomer is preferably from 15 to 75 mass% in monomer component (X2) (100 mass%).
Condition (iii):
   (X1)/(X2) is from 10/90 to 95/5, preferably from 40/60 to 90/10, from the viewpoint of water/oil repellency and friction durability.

In the case where polymer (A) is a core-shell structured polymer, a polymer which has at least 15 mass% and less than 45 mass% of fluorine atoms in the total polymer, i.e. the total of the polymer forming the core and the polymer forming the shell, is used. Concerning the breakdown of the proportion of such fluorine atoms, it is preferred that the proportion of fluorine atoms in the polymer forming the core is larger than the proportion of fluorine atoms in the polymer forming the shell.

Specifically, the proportion of fluorine atoms in the polymer forming the core is preferably from 40 to 60 mass%, more preferably from 40 to 55 mass%, from the viewpoint of durability of water repellency. The proportion of fluorine atoms in the polymer forming the shell is preferably from 15 to 40 mass%, more preferably from 15 to 30 mass%, from the viewpoint of adhesion to a material.

Polymer (B) is a (co)polymer having structural units based on monomer (a) as essential structural units, having no structural units based on monomer (c), and further having structural units based on monomer (b), structural units based on monomer (d) and structural units based on monomer (e), as required.

The proportion of fluorine atoms in polymer (B) (100 mass%) is at least 45 mass%, more preferably at least 49 mass%. The proportion of fluorine atoms in polymer (B) (100 mass%) is preferably at most 60 mass%, more preferably at most 58 mass%. Monomer (a):
Monomer (a) is a monomer having an R^{f} group having from 4 to 6 carbon atoms to which fluorine atoms are bonded, provided that the R^{f} group may have an etheric oxygen atom.
Monomer (a) may, for example, be the same one that constitutes polymer (A) (e.g. compound (1)).

From a viewpoint of the polymerizability with other monomers, flexibility of a film of the copolymer, adherence property of the copolymer to an article, solubility in a medium, ease of emulsion polymerization, etc., compound (1) is preferably a (meth)acrylate having a C₄₋₆ R^{F} group.

Compound (1) is preferably a compound of formula (1) wherein Z is a C₄₋₆ R^{F} group, Y is a C₁₋₄ alkylene group, n is 1, and X is group (3-3).
Monomer (b):
   Monomer (b) is at least one monomer selected from the group consisting of monomer (b1), monomer (b2) and monomer (b3).
   Polymer (B) has structural units based on monomer (b), whereby the friction durability is improved.
Monomer (b) may, for example, be the same one that constitutes polymer (A). Monomer (c):
   Monomer (c) is a monomer having an R^{f} group having at least 8 carbon atoms to which fluorine atoms are bonded and having at least 60% of hydrogen atoms of the alkyl group substituted by fluorine atoms.
   Polymer (B) has no structural units based on monomer (c), whereby it has little impact on environment.
Monomer (d):
   Monomer (d) is a monomer having no R^{f} group and having a crosslinkable functional group.
   Monomer (d) may, for example, be the same one that constitutes polymer (A). Monomer (e):
      Monomer (e) is a monomer other than monomer (a), monomer (b), monomer (c), and monomer (d).
      Monomer (e) may, for example, be the same one that constitutes polymer (A).

Polymer (B) may be produced by, for example, the following method:
A method comprising polymerizing monomer component (Y) containing monomer (a), not containing monomer (c) and containing monomer (b), monomer (d) and monomer (e) as required, in a medium in the presence of a surfactant and a polymerization initiator to obtain a solution, a dispersion or an emulsion of polymer (B).

The polymerization method may, for example, be dispersion polymerization, emulsion polymerization or suspension polymerization. And, the method may be single-stage polymerization or multistage polymerization.

The production method of polymer (B) preferably comprises emulsion polymerizing monomer component (Y) containing monomer (a), not containing monomer (c) and containing monomer (b), monomer (d) and monomer (e) as required, in an aqueous medium in the presence of a surfactant and a polymerization initiator to obtain a emulsion of polymer (B).

From the viewpoint of yield improvement of polymer (B), it is preferred that a mixture containing a monomer, a surfactant and an aqueous medium is pre-emulsified before emulsion polymerization. For example, a mixture containing a monomer, a surfactant and an aqueous medium is mixed and dispersed by a homomixer or a high-pressure emulsification equipment.

The polymerization initiator may, for example, be the same one that is used in production of polymer (A).

The amount of polymerization initiator is preferably from 0.1 to 5 parts by mass, more preferably from 0.1 to 3 parts by mass, per 100 parts by mass of monomer component (Y).

A molecular weight modifier may be used in the polymerization of the monomer component (Y). The molecular weight modifier may, for example, be the same one that is used in production of polymer (A).

The amount of the molecular weight modifier is preferably from 0.01 to 5 parts by mass, more preferably from 0.1 to 3 parts by mass, per 100 parts by mass of monomer component (Y).

The proportion of monomer (a) is preferably from 70 to 100 mass%, more preferably from 75 to 100 mass%, in monomer component (Y) (100 mass%) from the viewpoint of water/oil repellency and friction durability.

The proportion of monomer (b) is preferably from 0 to 30 mass%, more preferably from 0 to 20 mass%, in monomer component (Y) (100 mass%) from the viewpoint of water/oil repellency and friction durability.

The proportion of monomer (d) is preferably from 0 to 15 mass%, more preferably from 0 to 5 mass%, in monomer component (Y) (100 mass%) from the viewpoint of water/oil repellency and friction durability.

The proportion of monomer (e) is preferably from 0 to 15 mass%, more preferably from 0 to 5 mass%, in monomer component (Y) (100 mass%) from the viewpoint of water/oil repellency and friction durability.

### (Polymer (C))

Polymer (C) is a (co)polymer having structural units based on monomer (c) as essential structural units, and further having structural units based on monomer (a), structural units based on monomer (b), structural units based on monomer (d) and structural units based on monomer (e), as required.

The proportion of fluorine atoms in polymer (C) (100 mass%) is at least 15 mass%, preferably from 20 to 60 mass%.
Monomer (a):
   Monomer (a) is a monomer having an R^{f} group having from 4 to 6 carbon atoms to which fluorine atoms are bonded, provided that the R^{f} group may have an etheric oxygen atom.
   Monomer (a) may, for example, be the same one that constitutes polymer (A). Monomer (b):
      Monomer (b) is at least one monomer selected from the group consisting of monomer (b1), monomer (b2) and monomer (b3).
      Monomer (b) may, for example, be the same one that constitutes polymer (A). Monomer (c):
      Monomer (c) is a monomer having an R^{f} group having at least 8 carbon atoms to which fluorine atoms are bonded and having at least 60% of hydrogen atoms of the alkyl group substituted by fluorine atoms.

Polymer (C) has structural units based on monomer (c), whereby the friction durability is improved.

As monomer (c), compound (1') may, for example, be mentioned.

(Z'-Y)ₙX (1')

wherein Z' is an R^{f} group having at least 8 carbon atoms or group (2').

C_{i'}F_{2i'+1}O(CFX¹CF₂O)ⱼCFX²- (2)

wherein i' is an integer of at least 8, j is an integer of from 0 to 10, and each of X¹ and X² which are independent of each other, is a fluorine atom or a trifluoromethyl group.

The R^{f} group is preferably an R^{F} group. The R^{f} group may have a straight chain structure or branched structure, preferably a straight chain structure.

Y is a bivalent organic group or a single bond.

The bivalent organic group is preferably an alkylene group. The alkylene group may have a straight chain structure or branched structure. The alkylene group may have -O-, -NH-, -CO-, -SO₂-, -CD¹=CD²- (wherein each of D¹ and D² which are independent of each other, is a hydrogen atom or a methyl group), etc.
n is 1 or 2.

X is one of the above groups (3-1) to (3-5) when n is 1, and one of the above groups (4-1) to (4-4) when n is 2.

From a viewpoint of the polymerizability with other monomers, flexibility of a film of the copolymer, adherence property of the copolymer to an article, solubility in a medium, ease of emulsion polymerization, etc., compound (1') is preferably a (meth)acrylate having a C₈₋₁₆ R^{F} group.

Compound (1') is preferably a compound of formula (1') wherein Z is a C₈₋₁₆ R^{F} group, Y is a C₁₋₄ alkylene group, n is 1, and X is group (3-3).

Monomer (c) is available generally as a mixture of monomers having C₆₋₁₆ R^{f} group and containing a small amount of monomer (a).
Monomer (d):
   Monomer (d) is a monomer having no R^{f} group and having a crosslinkable functional group.
   Monomer (d) may, for example, be the same one that constitutes polymer (A). Monomer (e):
      Monomer (e) is a monomer other than monomer (a), monomer (b), monomer (c), and monomer (d).
      Monomer (e) may, for example, be the same one that constitutes polymer (A). Polymer (C) may be produced by, for example, the following method:

A method comprising polymerizing monomer component (Z) containing monomer (c) and further containing monomer (a), monomer (b), monomer (d) and monomer (e) as required, in a medium in the presence of a surfactant and a polymerization initiator to obtain a solution, a dispersion or an emulsion of polymer (C).

The polymerization method may, for example, be dispersion polymerization, emulsion polymerization or suspension polymerization. And, the method may be single-stage polymerization or multistage polymerization.

The production method of polymer (C) preferably comprises emulsion polymerizing monomer component (Z) containing monomer (c) and further containing monomer (a), monomer (b), monomer (d) and monomer (e) as required, in an aqueous medium in the presence of a surfactant and a polymerization initiator to obtain a emulsion of polymer (C).

From the viewpoint of yield improvement of polymer (C), it is preferred that a mixture containing a monomer, a surfactant and an aqueous medium is pre-emulsified before emulsion polymerization. For example, a mixture containing a monomer, a surfactant and an aqueous medium is mixed and dispersed by a homomixer or a high-pressure emulsification equipment.

The polymerization initiator may, for example, be the same one that is used in production of polymer (A).

The amount of polymerization initiator is preferably from 0.1 to 5 parts by mass, more preferably from 0.1 to 3 parts by mass, per 100 parts by mass of monomer component (Z).

A molecular weight modifier may be used in the polymerization of the monomer component (Z). The molecular weight modifier may, for example, be the same one that is used in production of polymer (A).

The amount of the molecular weight modifier is preferably from 0.01 to 5 parts by mass, more preferably from 0.1 to 3 parts by mass, per 100 parts by mass of monomer component (Z).

The proportion of monomer (a) is preferably from 0 to 1 mass%, more preferably from 0 to 0.3 mass%, in monomer component (Z) (100 mass%) from the viewpoint of water/oil repellency and friction durability.

The proportion of monomer (b) is preferably from 0 to 60 mass%, more preferably from 5 to 50 mass%, in monomer component (Z) (100 mass%) from the viewpoint of water/oil repellency and friction durability.

The proportion of monomer (c) is preferably from 20 to 100 mass%, more preferably from 30 to 90 mass%, in monomer component (Z) (100 mass%) from the viewpoint of water/oil repellency and friction durability.

The proportion of monomer (d) is preferably from 0 to 30 mass%, more preferably from 0 to 20 mass%, in monomer component (Z) (100 mass%) from the viewpoint of water/oil repellency and friction durability.

The proportion of monomer (e) is preferably from 0 to 30 mass%, more preferably from 0 to 20 mass%, in monomer component (Z) (100 mass%) from the viewpoint of water/oil repellency and friction durability.

The proportion of fluorine atoms in respective polymers (polymer (A) to (C)) (100 mass%) may be calculated based on the proportion of charged amount of each monomer at the time of production of a polymer and the proportion of fluorine atoms in each monomer. In order to determine the proportion of fluorine atoms in a polymer from the obtained polymer, the following methods, for example, may be applied: X-ray fluorescence analysis, in which the intensity of F-Ka is measured; oxygen combustion flask method, which comprises combusting the polymer in an oxygen-filled silica flask at a temperature of at least 100°C, having the combustion gas absorbed in a collection fluid, and then measuring F-ions by ion chromatography or F electrode method; silica tube oxygen combustion gas collection, in which the polymer is combusted in a silica tube; or carbon potassium capsule method, in which the polymer is thermally decomposed with potassium carbonate powder at a temperature of approximately 600°C in a platinum vessel and is measured by F electrode method.

### (Medium)

The medium may, for example, be water, an alcohol, a glycol, a glycol ether, a halogen compound, a hydrocarbon, a ketone, an ester, an ether, a nitrogenous compound, a sulfur compound, an inorganic solvent, or an organic acid. Among them, at least one selected from the group consisting of water, an alcohol, a glycol, a glycol ether and a glycol ester is preferred from the viewpoint of solubility and ease in handling.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, or 3-heptanol.

The glycol or the glycol ether may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, propylene glycol, propylene glycol monomethyl ether, propylene glycol monoethyl ether, propylene glycol dimethyl ether, dipropylene glycol, dipropylene glycol monomethyl ether, dipropylene glycol dimethyl ether, dipropylene glycol monoethyl ether, tripropylene glycol, tripropylene glycol monomethyl ether, polypropylene glycol, or hexylene glycol.

The halogen compound may, for example, be a halogenated hydrocarbon, or a halogenated ether.

The halogenated hydrocarbon may, for example, be a hydrochlorofluorocarbon, a hydrofluorocarbon, or a hydrobromocarbon.

The halogenated ether may, for example, be a hydrofluoro ether.

The hydrofluoro ether may, for example, be a separated-type hydrofluoro ether or a non-separated-type hydrofluoro ether. The separated-type hydrofluoro ether is a compound wherein an R^{F} or perfluoroalkylene group, and an alkyl or alkylene group, are connected via an etheric oxygen atom. The non-separated-type hydrofluoro ether is a hydrofluoro ether having a partially fluorinated alkyl or alkylene group.

The hydrocarbon may, for example, be an aliphatic hydrocarbon, an alicyclic hydrocarbon, or an aromatic hydrocarbon.

The aliphatic hydrocarbon may, for example, be pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane, or hexadecane.

The alicyclic hydrocarbon may, for example, be cyclopentane, methylcyclopentane, cyclohexane, methylcyclohexane, or ethylcyclohexane.

The aromatic hydrocarbon may, for example, be benzene, toluene, or xylene.

The ketone may, for example, be acetone, methyl ethyl ketone, 2-pentanone, 3-pentanone, 2-hexanone, or methyl isobutyl ketone.

The ester may, for example, be methyl acetate, ethyl acetate, butyl acetate, methyl propionate, methyl lactate, ethyl lactate, or pentyl lactate.

The ether may, for example, be diisopropyl ether, dioxane, or tetrahydrofuran.

The nitrogenous compound may, for example, be pyridine, N,N-dimethylformaldehyde, N,N-dimethylacetamide, or N-methylpyrrolidone.

The sulfur compound may, for example, be dimethyl sulfoxide, or sulfolane.

The inorganic solvent may, for example, be liquid carbon dioxide.

The organic acid may, for example, be acetic acid, propionic acid, malic acid, or lactic acid.

One of such media may be used alone, or two or more of the them may be used in combination as a mixture. When two or more of such media are used in combination as a mixture, one of them is preferably water. By using a mixture of media, control of solubility and dispersibility of the copolymer may be easy, and control of permeability and wettability to an article and solvent drying speed at the time of manufacture may be easy.

### (Surfactant)

The surfactant may be a hydrocarbon surfactant or a fluorinated surfactant, and, each of them may, for example, be an anionic surfactant, an nonionic surfactant, a cationic surfactant or a zwitterizonic surfactant.

From the viewpoint of dispersing stability, the surfactant is preferably a nonionic surfactant, a cationic surfactant, a combination of a nonionic surfactant and a cationic surfactant, or an anionic surfactant alone, more preferably a combination of a nonionic surfactant and a cationic surfactant.

The ratio of a nonionic surfactant to a cationic surfactant (a nonionic surfactant / a cationic surfactant) is preferably from 97/3 to 40/60 (mass ratio).

In a specific combination of a nonionic surfactant and an cationic surfactant, their total amount in the copolymer (100 mass%) can be adjusted to be at most 5 mass%, whereby negative effect to the water repellency of an article can be reduced.

The nonionic surfactant is preferably at least one member selected from the group of surfactants s¹ to s⁶.
Surfactant s¹:
   Surfactant s¹ is a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant s¹ is preferably a polyoxyalkylene monoalkyl ether, a polyoxyalkylene monoalkenyl ether or a polyoxyalkylene monopolyfluoroalkyl ether. As s¹, one of such surfactants may be used alone, or two or more of them may be used in combination.

An alkyl group, an alkenyl group, an alkapolyenyl group or a polyfluoroalkyl group (hereinafter collectively referred to as an R^{S} group) preferably has from 4 to 26 carbon atoms. The R^{S} group may have a straight chain structure or a branched structure. The branched-structured R^{S} group is preferably a secondary alkyl group, a secondary alkenyl group or a secondary alkapolyenyl group. A part or all of the hydrogen atoms of the R^{S} group may be substituted by fluorine atoms.

Specific examples of the R^{S} group include an octyl group, an dodecyl group, a tetradecyl group, a hexadecyl group, a stearyl group (octadecyl group), a behenyl group (docosyl group), an oleyl group (9-octadecenyl group), a heptadecylfluorooctyl group, a tridecylfluorohexyle group, 1H, 1H,2H,2H-tridecylfluorooctyl group, and a 1H,1H,2H,2H-nonafluorohexyl group.

A polyoxyalkylene (hereinafter referred to as POA) chain is preferably a catenated chain consisting of two or more of polyoxyethylene (hereinafter referred to as POE) chains and/or polyoxypropylene (hereinafter referred to as POP) chains. The POA chain may consists of one type of POA chains or two or more types of POA chains. When the POA chain consists of two or more types of POA chains, such POA chains are preferably linked to form blocks.

Surfactant s¹ is more preferably compound (s¹¹):
R¹⁰O[CH₂CH(CH₃)O]ₛ-(CH₂CH₂O)ᵣH (s¹¹)
   wherein R¹⁰ is an alkyl group having at least 8 carbon atoms or an alkenyl group having at least 8 carbon atoms, r is an integer of from 5 to 50, and s is an integer of from 0 to 20. Some of hydrogen atoms of the R¹⁰may be substituted by fluorine atoms.

When r is at least 5, the surfactant is soluble in water and homogeneously soluble in an aqueous medium, thus the water/oil repellent composition has good permeability to an article. When r is at most 50, its hydrophilicity is suppressed and water repellency will be good.

When s is at most 20, the surfactant is soluble in water and homogeneously soluble in an aqueous medium, thus the water/oil repellent composition has good permeability to an article.

When r and s are at least 2, the POE chains and the POP chains are linked to form blocks.
R¹⁰ is preferably a straight chain or a branched chain.
r is preferably an integer of from 10 to 30.
s is preferably an integer of from 0 to 10.

The followings compounds may be mentioned as examples of compound (s¹¹), wherein the POE chains and the POP chains are linked in block form:
C₁₈H₃₇O[CH₂CH(CH₃)O]₂-(CH₂CH₂O)₃₀H,
C₁₈H₃₅O-(CH₂CH₂O)₃₀H,
C₁₆H₃₃O[CH₂CH(CH₃)O]₅-(CH₂CH₂O)₂₀H,
C₁₂H₂₅O[CH₂CH(CH₃)O]₂-(CH₂CH₂O)₁₅H,
(C₈H₁₇)(C₆H₁₃)CHO-(CH₂CH₂O)₁₅H,
C₁₀H₂₁O[CH₂CH(CH₃)O]₂-(CH₂CH₂O)₁₅H,
C₆F₁₃CH₂CH₂O-(CH₂CH₂O)₁₅H,
C₆F₁₃CH₂CH₂O[CH₂CH(CH₃)O]₂-(CH₂CH₂O)₁₅H, and
C₄F₉CH₂CH₂O[CH₂CH(CH₃)O]₂-(CH₂CH₂O)₁₅H.

Surfactant s²:
   Surfactant s² is a nonionic surfactant made of a compound having at least one carbon-carbon triple bond and at least one hydroxy group in the molecule.
   Surfactant s² is preferably a nonionic surfactant made of a compound having one carbon-carbon triple bond and one or two hydroxy group(s) in the molecule.
   Surfactant s² may have a POA chain in the molecule. The POA chain may, for example, be a POE chain, a POP chain, a chain wherein POE chains and POP chains are linked in a random manner, or a chain wherein POE chains and POP chains are linked in block form.

Surfactant s² is preferably compounds (s²¹) to (s²⁴):
HO-CR¹¹R¹²-C=C-CR¹³R¹⁴-OH (s²¹)
HO-(A¹O)ᵤ-CR¹¹R¹²-C≡C-CR¹³R¹⁴-(OA²)ᵥ-OH (s²²)
HO-CR¹⁵R¹⁶-C≡C-H (s²³)
HO-(A³O)_{w}-CR¹⁵R¹⁶-C≡C-H (s²⁴)

Each of A¹ to A³ which are independent of one another, is an alkylene group. Each of u and v is an integer of at least 0, and (u + v) is an integer of at least 1. w is at least 1.

When each of u, v and w is at least 2, the plurality of each of A¹, A² and A³ may be the same or different, respectively.

A POA chain is preferably a POE chain, a POP chain or a chain containing a POE chain and a POP chain. The number of repeating units of a POA chain is preferably 1 to 50.

Each of R¹¹ to R¹⁶ which are independent of one another, is a hydrogen atom or an alkyl group.

The alkyl group is preferably a C₁₋₁₂ alkyl group, and more preferably a C₁₋₄ alkyl group. The alkyl group may, for example, be a methyl group, an ethyl group, a propyl group, a butyl group, or an isobutyl group.

Compound (s²²) is preferably compound (s²⁵); 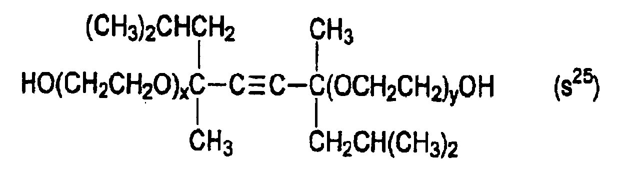 wherein each of x and y is an integer of from 0 to 100.

One of compound (s²⁵) may be used alone, or two or more of them may be used in combination.

Compound (s²⁵) is preferably a compound wherein both x and y are 0, the average of sum of x and y is from 1 to 4, or the average of sum of x and y is from 10 to 30.
Surfactant s³:
   Surfactant s³ is a nonionic surfactant made of a compound, wherein a POE chain and a POA chain consisting of two or more consecutively-connected oxyalkylene having at least 3 carbon atoms are catenated, and both two terminals are hydroxy groups.

A polyoxytetramethylene (hereinafter referred to as POT) and/or a POP chain is preferred as such a POA chain.

Surfactant s³ is preferably compound (s³¹) or compound (s³²)_{:}
HO(CH₂CH₂O)_{g1}(C₃H₆O)ₜ(CH₂CH₂O)_{g2}H (s³¹)
HO(CH₂CH₂O)_{g1}(CH₂CH₂CH₂CH₂O)ₜ(CH₂CH₂O)_{g2}H (s³²)
   g1 is an integer of from 0 to 200.
   t is an integer of from 2 to 100.
   g2 is an integer of from 0 to 200.

When g1 is 0, g2 is an integer of at least 2. When g2 is 0, g1 is an integer of at least 2.
-C₃H₆O- may be alternatively -CH(CH₃)CH₂-, -CH₂CH(CH₃)-, or mixture of -CH(CH₃)CH₂- and -CH₂CH(CH₃)-.

The POA chains are in block form.

The following compounds may be mentioned as examples of surfactant s³:
HO-(CH₂CH₂O)₁₅-(C₃H₆O)₃₅-(CH₂CH₂O)₁₅H,
HO-(CH₂CH₂O)₈-(C₃H₆O)₃₅-(CH₂CH₂O)₈H,
HO-(CH₂CH₂O)₄₅-(C₃H₆O)₁₇-(CH₂CH₂O)₄₅H, and
HO- (CH₂CH₂O)₃₄-(CH₂CH₂CH₂CH₂O)₂₈-(CH₂CH₂O)₃₄H.

Surfactant s⁴:
Surfactant s⁴ is a nonionic surfactant having an amine-oxide portion in the molecule.
Surfactant s⁴ is preferably compound (s⁴¹);
   (R¹⁷)(R¹⁸)(R¹⁹)N(→O) (s⁴¹)
   wherein each of R¹⁷ to R¹⁹ is a monovalent hydrocarbon group.

A surfactant having an amine oxide (N→O) is regarded as the nonionic surfactant in the present invention.

One of compound (s⁴¹) may be used alone, or two or more of them may be used in combination.

Compound (s⁴¹) is preferably compound (s⁴²) from the viewpoint of dispersion stability of the copolymer;
(R²⁰)(CH₃)₂N(→O) (s⁴²)
wherein R²⁰ is a C₆₋₂₂ alkyl group, a C₆₋₂₂ alkenyl group, a phenyl group to which a C₆₋₂₂ alkyl group is bonded, a phenyl group to which a C₆₋₂₂ alkenyl group is bonded, or a C_{6- 13} fluoroalkyl group. R²⁰ is preferably a C₈₋₂₂ alkyl group, a C₈₋₂₂ alkenyl group or a C₄₋₉ polyfluoroalkyl group.

The following compounds may be mentioned as examples of compound (s⁴²):
[H(CH₂)₁₂](CH₃)₂N(→O),
[H(CH₂)₁₄](CH₃)₂N(→O),
[H(CH₂)₁₆](CH₃)₂N(→O),
[H(CH₂)₁₈](CH₃)₂N(→O),
[F(CF₂)₆(CH₂)₂](CH₃)₂N(→O), and
[F(CF₂)₄(CH₂)₂](CH₃)₂N(→O).

Surfactant s⁵:
Surfactant s⁵ is a nonionic surfactant made of a polyoxyethylene mono(substituted phenyl) ether condensate or a polyoxyethylene mono(substituted phenyl) ether.

The substituted phenyl group is preferably a phenyl group substituted by a C₇₋₂₄ monovalent hydrocarbon group, more preferably a phenyl group substituted by an alkyl group, an alkenyl group or a styryl group.

Surfactant s⁵ is preferably a polyoxyethylene mono(alkylphenyl) ether condensate, a polyoxyethylene mono(alkenylphenyl) ether condensate, a polyoxyethylene mono(alkylphenyl) ether, a polyoxyethylene mono(alkenylphenyl) ether, or a polyoxyethylene mono[(alkyl)(styryl)phenyl] ether.

The polyoxyethylene mono(substituted phenyl) ether condensate or polyoxyethylene mono(substituted phenyl) ether may, for example, be a formaldehyde condensate of polyoxyethylene mono(nonylphenyl) ether, polyoxyethylene mono(nonylphenyl) ether, polyoxyethylene mono(octylphenyl) ether, polyoxyethylene mono(oleylpheyl) ether, polyoxyethylene [(nonyl)(styryl)phenyl] ether, or polyoxyethylene mono[(oleyl)(styryl)phenyl] ether.

Surfactant s⁶:
Surfactant s⁶ is a nonionic surfactant made of a fatty acid ester of a polyol.

The polyol represents glycerin, sorbitan, sorbit, polyglycerin, polyethylene glycol, polyoxyethylene glyceryl ether, polyoxyethylene sorbitan ether, polyoxyethylene sorbit ether.

Surfactant s⁶ may, for example, be an ester derived from stearic acid and polyethylene glycol in 1:1 molar ratio, an ester derived from an ether of sorbit and polyethylene glycol, and oleic acid in 1:4 molar ratio, an ester derived from an ether of polyoxyethylene glycol and sorbitan, and stearic acid in 1:1 molar ratio, an ester derived from an ether of polyethylene glycol and sorbitan, and oleic acid in 1:1 molar ratio, an ester derived from dodecanoic acid and sorbitan in 1:1 molar ratio, an ester derived from oleic acid and decaglycerin in 1:1 or 2:1 molar ratio, or an ester derived from stearic acid and decaglycerin in 1:1 or 2:1 molar ratio.

Surfactant s⁷:
When the surfactant contains a cationic surfactant, surfactant s⁷ is preferred as such a cationic surfactant.

Surfactant s⁷ is a cationic surfactant having a substituted ammonium salt form.

Surfactant s⁷ is preferably an ammonium salt, wherein at least one hydrogen atom connected to the nitrogen atom is substituted by an alkyl group, an alkenyl group or a POA chain having a hydroxy group at the terminal, and is more preferably compound (s⁷¹);

[(R²¹)₄N⁺]·X⁻ (s⁷¹)

wherein R²¹ is a hydrogen atom, a C₁₋₂₂ alkyl group, a C₂₋₂₂ alkenyl group, a C₁₋₉ fluoroalkyl group, or a POA chain having a hydroxy group at the terminal. The four R²¹'s may be the same or different, however, all of the four R²¹ are not hydrogen atoms at the same time.

R²¹ is preferably a C₆₋₂₂ long-chain alkyl group, a C₆₋₂₂ long-chain alkenyl group, or a C₁₋₉ fluoroalkyl group.

When R²¹ is an alkyl group other than a long-chain alkyl group, the R²¹ is preferably a methyl group or an ethyl group.

When R²¹ is a POA chain having a hydroxy group at the terminal, the POA chain is preferably a POE chain.

X⁻ is a counter ion.

X⁻ is preferably a chloride ion, an ethylsulfate ion or an acetate ion.

Compound (s⁷¹) may, for example, be monostearyltrimethylammonium chloride, monostearyldimethylmonoethylammonium ethylsulfate,
mono(stearyl)monomethyldi(polyethylene glycol)ammonium chloride, monofluorohexyltrimethylammonium chloride, di(tallow alkyl)dimethylammonium chloride, or dimethyl mono coconut amine acetate.

Surfactant s⁸:
When the surfactant contains a zwitterizonic surfactant, surfactant s⁸ is preferred as such a surfactant.

Surfactant s⁸ may, for example, be an alanine, an imidazolinium betaine, an amidebetaine or betaine acetate.

The hydrophobic group in the surfactant s⁸ is preferably a C₆₋₂₂ long-chain alkyl group, a C₆₋₂₂ long-chain alkenyl group, or a C₁₋₉ fluoroalkyl group.

Surfactant s⁸ may, for example, be dodecylbetaine, stearylbetaine, dodecylcarboxymethylhydroxyethyl imidazolinium betaine, dodecydimethylaminoacetate betaine, or a fatty acid amidepropyl dimethylaminoacetate betaine.

Surfactant s⁹_{:}
Surfactant s⁹ may used as the surfactant.
Surfactant s⁹ is a polymeric surfactant made of a block copolymer, a random copolymer or a hydrophobically modified body of a hydrophilic copolymer, which is derived from a hydrophilic monomer and a hydrophobic hydrocarbon monomer and/or a hydrophobic fluoromonomer.
Surfactant s⁹ may, for example, be a block or random copolymer derived from polyethylene glycol (meth)acrylate and a long-chain alkyl acrylate, a block or random copolymer derived from polyethylene glycol (meth)acrylate and a fluoro (meth)acrylate, a block or random copolymer derived from vinyl acetate and a long-chain alkyl vinyl ether, a block or random copolymer derived from vinyl acetate and a long-chain alkylvinyl ester, a polymer derived from styrene and maleic anhydride, a condensate of polyvinyl alcohol and stearic acid, a condensate of polyvinyl alcohol and stearyl mercaptan, a condensate of polyallylamine and stearic acid, a condensate of polyethyleneimine and stearyl alcohol, methylcellulose, hydroxypropylmethylcellulose, or hydroxyethylmethylcellulose.

Examples of a commercial product of surfactant s⁹ include MP Polymer (item code: MP-103, MP-203) manufactured by Kurary Co., Ltd., SMA resins manufactured by Elf Atochem Inc., METOLOSE manufactured by Shin-Etsu Chemical Co., Ltd., EPOMIN RP manufactured by NIPPON SHOKUBAI Co., Ltd., and Surflon (item code: S-381, S-393) manufactured by AGC Seimi Chemical Co., Ltd.

Surfactant s⁹ is preferably surfactant s⁹¹ when the medium is an organic solvent, or the organic content in the solvent is high;

Surfactant s⁹¹: a polymeric surfactant made of a block or random copolymer (its polyfluoroalkyl denatured body) of a lipophilic monomer and a fluoromonomer.

Surfactant s⁹¹ may, for example, be a copolymer derived from an alkyl acrylate and fluoro (meth)acrylate, or a copolymer derived from an alkyl vinyl ether and a fluoroalkyl vinyl ether.

Examples of a commercial product of surfactant s⁹¹ include Surflon (item code: S-383, SC-100 series) manufactured by AGC Seimi Chemical Co., Ltd.

From the viewpoint of excellence in water repellency, durability of the water/oil repellent composition and stability of the obtained emulsion, the combination of the surfactants is preferably a combination of surfactant s¹, surfactant s² and surfactant s⁷; a combination of surfactant s¹, surfactant s³ and surfactant s⁷; or a combination of surfactant s¹, surfactant s², surfactant s³ and surfactant s⁷, more preferably such combinations wherein surfactant s⁷ is compound (s⁷¹).

The total amount of the surfactants is preferably from 1 to 6 parts by mass in the copolymer (100 parts by mass).

### (Additives)

The water/oil repellent composition of the present invention may contain various additives as required.

Additives may, for example, be a penetrant, an anti-foaming agent, a water absorbent, an anti-stat, an anti-crease agent, a softener, a film-forming aid, a watersoluble polymer (polyacrylamide, polyvinyl alcohol, etc.), a thermosetting agent (melamine resin, urethane resin, etc.), an epoxy curing agent (isophthalic acid hydrazide, adipic acid dihydrazide, sebacic acid dihydrazide, dodecanedioic acid dihydrazide, 1,6-hexamethylene bis(N,N-dimethylsemicarbazide), 1,1,1',1'-tetramethyl-4,4'-(methylene-di-p-phenylene)disemicarbazide, spiroglycol, etc.), a thermosetting catalyst, a cross-linking catalyst, a synthetic resin, a fiber stabilizer, etc.

The water/oil repellent composition of the present invention may contain a copolymer having water and/or oil repellency other than the copolymer of the present invention (e.g. a commercial water repellent agent, a commercial oil repellent agent or a commercial water/oil repellent agent), a water repellent compound having no fluorine atom, etc., as required. Such a water repellent compound having no fluorine atom may, for example, be a paraffin compound, an aliphatic amide compound, an alkylethylene urea compound or a silicon compound.

### (Preparation of the water/oil repellent composition)

The water/oil repellent composition of the present invention may be prepared by e.g. mixing emulsions of each polymer in a definite ratio.

The mass ratio of polymer (A) (solid content) to polymer (B) (solid content) ((A)/(B)) is preferably from 10/90 to 95/5, more preferably from 10/90 to 70/30, from the viewpoint of water/oil repellency and friction durability.

When the water/oil repellent composition contains polymer (C), the ratio of the sum of the mass of polymer (A)) (solid content) and polymer (B) (solid content) to the mass of polymer (C) (solid content) ({(A)+(B)}/(C)) is preferably from 99.9/0.1 to 90/10 from the viewpoint of water/oil repellency and friction durability.

The proportion of polymer (C) (solid content) in the total of polymers (A) to (C)
(solid content) (100 mass%) is preferably at most 10 mass% from the viewpoint of the impact on environment.

Regarding the water/oil repellent composition of the present invention, each polymer is preferably dispersed particles in the medium. The average particle size of the polymer is preferably from 10 to 1,000 nm, more preferably from 10 to 300 nm, particularly preferably from 10 to 200 nm. When the average particle size is within such a range, a surfactant, a dispersant, etc. are not required in large amounts, water/oil repellency is good, dyed fabrics can be treated without color dulling, and the particles are stably-dispersed without precipitation in the medium. The average particle size of the polymer is measured by a dynamic light scattering device, an electron microscope, etc.

The solid content concentration of the water/oil repellent composition is preferably from 25 to 40 mass% in the emulsion (100 mass%) immediately after the production of the polymer.

The solid content concentration of the water/oil repellent composition is preferably from 0.2 to 5 mass% in the water/oil repellent composition (100 mass%) at the time of treating articles.

The solid content concentration of the emulsion or the water/oil repellent composition is calculated from the mass of the emulsion or the water/oil repellent composition before heating and the mass of it after drying in the convection-drying machine at the temperature of 120°C for 4 hours.

The above described water/oil repellent composition of the present invention is a blend of polymer (A) having specific structural units and having a small proportion of the fluorine atoms and polymer (B) having specific structural units and having a large proportion of fluorine atoms, whereby it can impart water/oil repellency with excellent friction durability to the surface of an article even though it has structural units based on a monomer having an R^{f} group having at most 6 carbon atoms, and has structural units based on a monomer having an R^{f} group having at least 8 carbon atoms reduced as much as possible.

In addition, regarding the water/oil repellent composition of the present invention, the content (the content when the solid content concentration is 20%) of perfluorooctanoic acid (PFOA), perfluorooctane sulfonate (PFOS), their precursors and their analogues, environmental impact of which is pointed out, can be reduced to under the detection limit of analysis value of LC-MS/MS in the method disclosed in Japanese Patent Application No. 2007-333564.

The water/oil repellent composition of the present invention may be used alone, or used with another water/oil repellent composition by mixture. For example, it is used with a fluorinated soil release agent which has much hydrophilic component and little water repellent property, whereby wash-durable water/oil repellent soil-release finishing is possible.

### <Article>

The article of the present invention is an article treated with the water/oil repellent composition of the present invention.

Examples of the article treated with the water/oil repellent composition include fibers (natural fibers, synthetic fibers, blended fibers, etc.), various fiber products, nonwoven fabrics, resins, paper, leather, metal, stone, concrete, plaster, and glass.

An example of a method for treating the article is to coat or dip the article with the water/oil repellent composition by a publicly-known coating method and then to dry it.

Additionally, such an article may be finished to be antistatic, softening, antibacterial, deodorant or waterproof.

An example of water proofing may be to form a water proof membrane. The water proof membrane may, for example, be a porous membrane obtained from a urethane resin or an acryl resin, a nonporous membrane obtained from a urethane resin or an acryl resin, a polytetrafluoroethylene membrane or a moisture-permeable water proof membrane which is a combination of the above membranes, etc.

Fabric products treated with the water/oil repellant composition of the present invention have softened textile because of softness of the coating, and are given water/oil repellency of high quality. And, they have excellent adhesion on the surface, and are given water/oil repellency even by curing at a low temperature. And, because deterioration of the performance by friction and washing is small, the initial performance at the treatment can be stably maintained. Paper treated with the water/oil repellent composition of the present invention has excellent size property, water repellency and oil repellency even when dried under a low-temperature drying condition. Moreover, when resins, glass or surface of metals is treated with the water/oil repellent composition of the present invention, a water/oil repellent coating film which has good adhesion to an article and good film-forming property can be formed.

The above-described article of the present invention has little impact on environment and is less susceptible to deterioration of water/oil repellency by friction because a water/oil repellent composition which can impart excellent water/oil repellency with excellent friction durability to a surface of an article even though it has structural units based on a monomer having an R^{f} group having at most 6 carbon atoms and having structural units based on a monomer having an R^{f} group having at least 8 carbon atoms reduced as much as possible, is used.

### EXAMPLES

Now, the present invention will be described in detail with reference to Examples. It should be understood, however, that the present invention is by no means limited to these Examples.

Examples 23, 26, 27, 29 to 33, 35 to 44, 48 to 59, 61 and 63 are Working Examples of the present invention, and Examples 21, 22, 24, 25, 28, 34, 45 to 47, 60 and 62 are Comparative Examples.

### (Rainfall test)

Rainfall test of a test cloth was carried out in accordance with the spray method described in JIS L1092-98 6.2 except that the water volume was changed from 250 mL to 2 L. Water repellency was evaluated with five grades of from 1 to 5. A higher grade means that the water repellency is better. +(-) besides the grade means that the property is slightly better (worse). The cloth of grade 3 or more is regarded to have water repellency.

### (Friction durability)

Friction test of a test cloth was carried out by means of a pilling tester (manufactured by Toyo Seiki Seisaku-sho, Ltd.). Frequency of friction was 1,500.

After this friction test, water repellency of the test cloth was evaluated by the above rainfall test.

### (Wetting friction durability)

After 0.5 mL of distilled water was dropped onto the surface of a test cloth, wetting friction test was carried out in the same manner as the above friction test. Friction frequency was 500, and the surface of the test cloth was kept to be wetted by properly adding distilled water.

After this wetting friction test, water repellency of the test cloth was evaluated by the above rainfall test.

### (Water repellency)

Water repellency of a test cloth was measured in accordance with the spray method described in JIS L1092-98 6.2. Water repellency was evaluated in grades listed in Table 1.

**TABLE 1**

| Water repellency level | State of object |
|---|---|
| 100 | No moistening or water drops on the surface |
| 90 | Slight water drops on the surface |
| 80 | Separate partial moistening on the surface |
| 70 | Moistening on the half of the surface |
| 50 | Moistening over the entire surface |
| 0 | Completely wetted |

### (Oil repellency)

Oil repellency of a test cloth was measured in accordance with the test method of AATCC-TM118-1966. Oil repellency was evaluated with grades listed in Table 2. +(-) besides the grade means that the property is slightly better (worse).

**TABLE 2**

| Oil repellency No. | Test liquid Tested | Surface tension |
|---|---|---|
| | | mN/m(25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-hexadecane | 27.3 |
| 2 | Nujol 65 part/hexadecane 35 part | 29.6 |
| 1 | Nujol | 31.2 |
| 0 | Oil repellency less than that of No.1 | - |

### (Bundesmann rainfall test)

Rainfall test of a test cloth was carried out in accordance with Bundesmann test described in JIS L1092-98. Water repellency was evaluated with five grades of from 1 to 5. A higher grade means that the water repellency is better. +(-) besides the grade means that the property is slightly better (worse). The cloth of grade 3 or more is regarded to have water repellency.

### (Wash durability (P))

A test cloth was washed repeatedly for 20 times in accordance with JIS L1092-98 5 2 (a)(3)(C method). After the test cloth was washed, it was heated and dried through a pintenter at 120°C for 60 seconds. Water repellency of the test cloth after drying was evaluated by the above Bundesmann rainfall test.

### (Wash durability (D))

A test cloth was washed repeatedly for 20 times in accordance with JIS L1092-98 5 2 (a)(3)(C method). After washing, 1 kg in total of the test cloth and a loading cloth (polyester/cotton mix) was put into a drying machine (NH-D402, manufactured by Matsushita Electric Industrial Co., Ltd.) and dried in "strong/standard course" for 70 minutes. Water repellency of the test cloth after drying was evaluated by the above Bundesmann rainfall test.

### (Abbreviations)

Monomer (a):
   C6FMA: C₆F₁₃C₂H₄OCOC(CH₃)=CH₂
   C4FMA: C₄F₉C₂H₄OCOC(CH₃)=CH₂
Monomer (b):
   VCM: vinyl chloride
   VdCl: Vinylidene chloride
   STA: Stearyl acrylate
   VMA: Behenyl methacrylate
   VA: Behenyl acrylate
Monomer (c) (partially containing monomer (a)):
   CmFA: F(CF₂)ₘCH₂CH₂OCOCH=CH₂ (a mixture of the compounds of this formula, wherein m is from 6 to 16, proportion of the compound having m of 8 or more is at least 99 mass%, and the average of m is 9)
Monomer (d):
   GMA: Glycidyl methacrylate
   HEA: 2-Hydroxyethyl acrylate
   NMAM: N-Methylolacrylamide
   NBMAM: N-Butoxymethylacrylamide
   D-BI: 3,5-dimethylpyrazole adduct of 2-isocyanatoethyl (meth)acrylate (the following formula (5))
   AT600: Phenylglycidylethylacrylate tolylenediisocyanate (manufactured by KYOEISHA CHEMICAL Co., Ltd.) 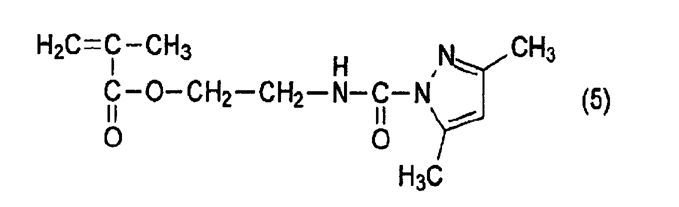
Monomer (e):
   CHMA: Cyclohexyl methacrylate
   DOM: Dioctyl maleate

Surfactant s¹:
   PEO-30: 10 mass% aqueous solution of polyoxyethylene oleyl ether (about-26-mole ethylene oxide adduct)
Surfactant s²:
   AGE-10: 10 mass% aqueous solution of ethylene oxide adduct of acetylene glycol (moles of ethylene oxide added: 10)
   AGE-10: 30 mass% aqueous solution of ethylene oxide adduct of acetylene glycol (moles of ethylene oxide added: 30)
Surfactant s³:
   EPO-40: 10 mass% aqueous solution of ethylene oxide/propylene oxide polymer (proportion of ethylene oxide: 40 mass%)
Surfactant s⁷:
   ATMAC: 10 mass% aqueous solution of monostearyltrimethylammonium chloride
   FDMAC: 10 mass% aqueous solution of cocoalkyl dimethyl amine acetate Polymerization initiator:
   VA-061 A: 10 mass% aqueous solution of acetate of 2,2'-azobis[2-(2-imidazolin-2-yl)propane] (VA061, manufactured by Wako Pure Chemical Industries, Ltd.)
   V-59: 2,2'-Azobis(2-methylbutyronitrile)
   V601: 2,2'-Azobis(2-methylpropionate)
Molecular weight modifier:
   StSH: Stearylmercaptan
   DoSH: n-Dodecylmercaptan
Medium:
   DPG: Dipropylene glycol
   Water: lon-exchanged water
Additives:
   K15: Silicone softener (Hisofter K15, manufactured by Meisei Chemical Works, Ltd.)
   MF-H: Blocked isocyanate (MEKANATE MF-H, manufactured by Meisei Chemical Works, Ltd.)
   TP-10: Blocked isocyanate (MEKANATE TP-10, manufactured by Meisei Chemical Works, Ltd.)
   XAN: Blocked isocyanate (Phobol-XAN, manufactured by Huntsman),
   WT30: Blocked isocyanate (DURANATE WT30-100, manufactured by Asahi Kasei Chemicals Corp.)

### EXAMPLE 1

Production of polymer(A1):
98.6 g of C6FMA, 5.5 g of VMA, 32.8 g of AGE-10, 141.5 g of water, 11 g of DPG and 0.5 g of StSH were put into a glass beaker, heated at 60°C for 30 minutes, and then mixed by a homomixer (BIO MIXER, manufactured by Nihonseiki Kaisha, Ltd.) to obtain a mixture.

The mixture was treated by a high-pressure emulsification equipment (Mini-Lab, manufactured by APV Ranie) at 60°C and 40 MPa to obtain an emulsion. 250 g of the obtained emulsion was put into a stainless reactor, 0.3 g of V-601 was added thereinto, and it was cooled to 30°C or lower. After the gas phase was replaced with nitrogen, 5.5 g of VCM was introduced, and then, the reaction mixture was heated to 65°C for 15 hours with stirring, to obtain an emulsion of a first-stage polymer having a solid content concentration of 34.0 mass% was obtained. The solid content was 34.2 mass%.

203.0 g of the emulsion of the first-stage polymer, 12.5 g of C6FMA, 8.28 g of CHMA, 8.8 g of GMA, 0.29 g of StSH, 2.7 g of DPG and 63.3 g of water were put into a stainless autoclave, to obtain a mixture.

The obtained mixture was stirred at 60°C for 1 hour and cooled, and 0.02 g of V-59 was added. After the gas phase was replaced with nitrogen, polymerization was carried out at 65°C for 15 hours, to obtain an emulsion of multistage polymer (polymer (A1)). The proportion of the monomers, the solid content concentration and the proportion of fluorine atoms in the polymer are shown in Table 3.

### EXAMPLE 2

Production of polymer (A2):
409.4 g of the first-stage polymer produced in Example 1 (solid content concentration: 34.2 mass%), 11.9 g of C6FMA, 7.7 g of CHMA, 8.4 g of GMA, 0.33 g of StSH, 3.15 g of DPG and 52.2 g of water were put into a stainless autoclave to obtain a mixture.

The obtained mixture was stirred at 60°C for 1 hour and cooled, and 0.04 g of V-59 was added. After the gas phase was replaced with nitrogen, 7.0 g of VCM was added, and polymerization was carried out at 65°C for 15 hours. After cooling, 0.02 g of V-59 was added, and the gas phase was replaced with nitrogen, followed by maturing the mixture at 65°C for 4 hours. After cooling, an emulsion of a multistage polymer (polymer (A2)) was obtained. The proportion of the monomers, the solid content concentration and the proportion of fluorine atoms in the polymer are shown in Table 3.

**TABLE 3**

| Proportion of monomer (mass%) | | | Example 1 | Example 2 |
|---|---|---|---|---|
| | | | (A1) | (A2) |
| (X1) | (a) | C6FMA | 90 | 90 |
| | (b1) | VMA | 5 | 5 |
| | (b2) | VCM | 5 | 5 |
| (X2) | (a) | C6FMA | 42 | 34 |
| | (b2) | VCM | | 20 |
| | (e) | CHMA | 28 | 24 |
| | (d) | GMA | 30 | 22 |
| Total | (a) | C6FMA | 75.6 | 78.8 |
| | (b1) | VMA | 3.5 | 4 |
| | (b2) | VCM | 3.5 | 8 |
| | (e) | CHMA | 8.4 | 4.8 |
| | (d) | GMA | 9 | 4.4 |
| [a1]-[a2] (mass%) | | | 48 | 56 |
| (X1)/(X2) (mass ratio) | | | 7/3 | 8/2 |
| Solid content (mass%) | | | 34.8 | 35.0 |
| Fluorine atom (mass%) | | | 43.2 | 44.9 |

### EXAMPLE 3

Production of polymer (A3):
68.4 g of C6FMA, 47.4 g of VA, 4.8 g of D-BI, 30.2 g of PEO-30, 6.0 g of EPO-40, 6.0 g of ATMAC, 144.4 g of water, 36.2 g of DPG and 1.2 g of DoSH were put into a glass beaker, heated at 60°C for 30 minutes, and then mixed by a homomixer to obtain a mixture.

The obtained mixture was treated by a high-pressure emulsification equipment at 60°C and 40 MPa to obtain an emulsion. 300 g of the obtained emulsion was put into a stainless reactor, and was cooled to 40°C or lower. After adding 5.0 g of VA-061A and replacing the gas phase with nitrogen, polymerization was carried out at 65°C for 15 hours with stirring to obtain an emulsion of polymer (A3). The proportions of the monomers, the solid content concentration and the proportion of fluorine atoms in the polymer are shown in Table 6.

### EXAMPLE 4

Production of polymer (A4):
59.5 g of C6FMA, 16.8 g of STA, 2.5 g of GMA, 0.5 g of HEA, 8.2 g of NMAM, 5.3 g of NBMAM, 23.3 g of PEO-30, 11.7 g of AGE-10, 5.8 g of FDMC, 179.2 g of water, 11.7 g of DPG and 1.1 g of DoSH were put into a glass beaker, heated at 60°C for 30 minutes, and then mixed by a homomixer to obtain a mixture.

The obtained mixture was treated by a high-pressure emulsification equipment at 60°C and 40 MPa to obtain an emulsion. 300 g of the obtained emulsion was put into a stainless reactor, and was cooled to 40°C or lower. After adding 20.6 g of VdCl and 0.4 g of V-59 and replacing the gas phase with nitrogen, polymerization was carried out at 60°C for 15 hours with stirring to obtain an emulsion of polymer (A4). The proportions of the monomers, the solid content concentration and the proportion of fluorine atoms in the polymer are shown in Table 6.

### EXAMPLE 5

Production of polymer (A5):
89.3 g of C6FMA, 15.7 g of STA, 4.8 g of D-BI, 30.2 g of PEO-30, 6.0 g of EPO-40, 6.0 g of ATMAC, 144.4 g of water, 36.2 g of DPG and 1.2 g of DoSH were put into a glass beaker, heated at 60°C for 30 minutes, and then mixed by a homomixer to obtain a mixture.

The obtained mixture was treated by a high-pressure emulsification equipment at 60°C and 40 MPa to obtain an emulsion. 300 g of the obtained emulsion was put into a stainless reactor, and was cooled to 40°C or lower. After adding 5.2 g of VA-061 A and replacing the gas phase with nitrogen, 9.3 g of VCM was introduced, and polymerization was carried out with stirring at 60°C for 15 hours to obtain an emulsion of polymer (A5). The proportions of the monomers, the solid content concentration and the proportion of fluorine atoms in the polymer are shown in Table 6.

### EXAMPLE 6

Production of polymer (A6):
An emulsion of polymer (A6) was obtained in the same manner as in Example 5 except that charged amount of each ingredient was changed to the amount shown in Table 4. The proportion of each monomer, the solid content concentration and the proportion of fluorine atoms in the polymer are shown in Table 6.

### EXAMPLE 7

Production of polymer (A7):
An emulsion of polymer (A7) was obtained in the same manner as in Example 5 except that charged amount of each ingredient was changed to the amount shown in Table 4. The proportion of each monomer, the solid content concentration and the proportion of fluorine atoms in the polymer are shown in Table 6.

### EXAMPLE8

Production of polymer (B1):
An emulsion of polymer (B1) was obtained in the same manner as in Example 5 except that charged amount of each ingredient was changed to the amount shown in Table 4. The proportion of each monomer, the solid content concentration and the proportion of fluorine atoms in the polymer are shown in Table 6.

### EXAMPLE 9

Production of polymer (B2):
An emulsion of polymer (B2) was obtained in the same manner as in Example 5 except that charged amount of each ingredient was changed to the amount shown in Table 4. The proportion of each monomer, the solid content concentration and the proportion of fluorine atoms in the polymer are shown in Table 6.

### EXAMPLE 10

Production of polymer (B3):
An emulsion of polymer (B3) was obtained in the same manner as in Example 4 except that charged amount of each ingredient was changed to the amount shown in Table 4. The proportion of each monomer, the solid content concentration and the proportion of fluorine atoms in the polymer are shown in Table 6.

### EXAMPLE 11

Production of polymer (B4):
An emulsion of polymer (B4) was obtained in the same manner as in Example 4 except that charged amount of each ingredient was changed to the amount shown in Table 5. The proportion of each monomer, the solid content concentration and the proportion of fluorine atoms in the polymer are shown in Table 7.

### EXAMPLE 12

Production of polymer (B5):
An emulsion of polymer (B5) was obtained in the same manner as in Example 5 except that charged amount of each ingredient was changed to the amount shown in Table 5. The proportion of each monomer, the solid content concentration and the proportion of fluorine atoms in the polymer are shown in Table 7.

### EXAMPLE 13

Production of polymer (B6):
An emulsion of polymer (B6) was obtained in the same manner as in Example 3 except that charged amount of each ingredient was changed to the amount shown in Table 5. The proportion of each monomer, the solid content concentration and the proportion of fluorine atoms in the polymer are shown in Table 7.

### EXAMPLE 14

Production of polymer (B7):
An emulsion of polymer (B7) was obtained in the same manner as in Example 3 except that charged amount of each ingredient was changed to the amount shown in Table 5. The proportion of each monomer, the solid content concentration and the proportion of fluorine atoms in the polymer are shown in Table 7.

### EXAMPLE 15

Production of polymer (C1):
An emulsion of polymer (C1) was obtained in the same manner as in Example 5 except that charged amount of each ingredient was changed to the amount shown in Table 5. The proportion of each monomer, the solid content concentration and the proportion of fluorine atoms in the polymer are shown in Table 7.

### EXAMPLE 16

Preparation of polymer (C2):
A commercial water/oil repellent agent (TG-410H, solid content concentration: 18.1 mass%, manufactured by Daikin Industries, Ltd.) was prepared as an emulsion of polymer (C2). Polymer (C2) is a polymer having structural units based on CmFA and having 22 mass% of fluorine atoms in the polymer.

### EXAMPLE 17

Production of polymer (C3):
An emulsion of polymer (C1) was obtained in the same manner as in Example 5 except that charged amount of each ingredient was changed to the amount shown in Table 5. The proportion of each monomer, the solid content concentration and the proportion of fluorine atoms in the polymer are shown in Table 7.

### EXAMPLE 18

Production of another polymer (D1):
An emulsion of polymer (D1), which is another polymer than the above-mentioned polymers and has no structural units based on monomer (b), was obtained in the same manner as in Example 3 except that charged amount of each ingredient was changed to the amount shown in Table 5. The proportion of each monomer, the solid content concentration and the proportion of fluorine atoms in the polymer are shown in Table 7.

### EXAMPLE 19

Production of another polymer (D2):
An emulsion of non-fluoropolymer (D2), which is another polymer than the above-mentioned polymers, was obtained in the same manner as in Example 5 except that charged amount of each ingredient was changed to the amount shown in Table 5. The proportion of each monomer, the solid content concentration and the proportion of fluorine atoms in the polymer are shown in Table 7.

### EXAMPLE 20

Production of crosslinking agent:
A crosslinking agent (blocked oligomeric isocyanate) was obtained by the method described in Example 4 in paragraph [0085] of JP-A-200-511507.

**TABLE 4**

| Charged amount (g) | | Ex. 3 | Ex. 4 | Ex. 5 | Ex. 6 | Ex. 7 | Ex. 8 | Ex. 9 | Ex. 10 |
|---|---|---|---|---|---|---|---|---|---|
| | | (A3) | (A4) | (A5) | (A6) | (A7) | (B1) | (B2) | (B3) |
| (a) | C6FMA | 68.4 | 59.5 | 89.3 | 88.6 | | 114.9 | 114.9 | 114.9 |
| (a) | C4FMA | | | | | 79.7 | | | |
| (b2) | VCM | | | 9.3 | 9.2 | 8.3 | 5.5 | 5.5 | |
| (b3) | VdCl | | 20.6 | | | | | | 5.5 |
| (b1) | STA | | 16.8 | 15.7 | | 14.0 | | | |
| (b1) | VMA | | | | | | 6.4 | | |
| (b1) | VA | 47.4 | | | 15.6 | | | 6.4 | 6.4 |
| (c) | CmFA | | | | | | | | |
| (e) | CHMA | | | | | | | | |
| (e) | DOM | | | | | | | | |
| (d) | GMA | | 2.5 | | | | | | |
| (d) | HEA | | 0.5 | | | | | | |
| (d) | NMAM | | 8.2 | | | | | | |
| (d) | NBMAM | | 5.3 | | | | | | |
| (d) | AT600 | | | | | | | | |
| (d) | D-BI | 4.8 | | 4.8 | 4.8 | 4.3 | | | |
| s¹ | PEO-30 | 30.2 | 23.3 | 30.2 | 43.1 | 26.9 | | | |
| s² | AGE-10 | | 11.7 | | 4.8 | | 38.3 | 38.3 | 38.3 |
| s² | AGE-30 | | | | 4.8 | | | | |
| s³ | EPO-40 | 6.0 | | 6.0 | 12.0 | 5.4 | | | |
| s⁷ | ATMAC | 6.0 | | 6.0 | | 5.4 | 5.1 | 5.1 | 5.1 |
| s⁷ | FDMC | | 5.8 | | | | | | |
| VA-061A | | 5.2 | | 5.2 | 10.3 | 4.6 | | | |
| V-59 | | | 0.4 | | | | | | |
| V-601 | | | | | | | 0.3 | 0.3 | 0.3 |
| StSH | | | | | | | 0.6 | 0.6 | 0.6 |
| DoSH | | 1.2 | 1.1 | 1.2 | 1.2 | 1.1 | | | |
| DPG | | 36.2 | 11.7 | 36.2 | 35.9 | 32.3 | 12.8 | 12.8 | 12.8 |
| Water | | 144.4 | 179.2 | 144.4 | 118.1 | 128.9 | 165.2 | 165.2 | 165.2 |

**TABLE 5**

| Charged amount (g) | | Ex. 11 | Ex. 12 | Ex. 13 | Ex. 14 | Ex. 15 | Ex. 17 | Ex. 18 | Ex. 19 |
|---|---|---|---|---|---|---|---|---|---|
| | | (B4) | (B5) | (B6) | (B7) | (C1) | (C3) | (D1) | (D2) |
| (a) | C6FMA | 114.9 | 100.5 | 127.6 | | | | 49.0 | |
| (a) | C4FMA | | | | 114.9 | | | | |
| (b2) | VCM | | 10.9 | | 5.5 | | 21.5 | | 9.3 |
| (b3) | VdCl | 5.5 | | | | | | | |
| (b1) | STA | | | | | 57.4 | | | |
| (b1) | VMA | 6.4 | 14.4 | | 6.4 | | | | |
| (b1) | VA | | | | | | | | 105.0 |
| (c) | CmFA | | | | | 63.8 | 83.8 | | |
| (e) | CHMA | | | | | | | 32.7 | |
| (e) | DOM | | | | | | 7.2 | | |
| (d) | GMA | | | | | 3.8 | | 35 | |
| (d) | HEA | | | | | | | | |
| (d) | NMAM | | | | | | | | |
| (d) | NBMAM | | | | | | | | |
| (d) | AT600 | | | | | 2.6 | | | |
| (d) | D-BI | | | | | | | | 4.8 |
| s¹ | PEO-30 | | | | | | 43.1 | 23.3 | 30.2 |
| s² | AGE-10 | 38.3 | 38.3 | 38.3 | 38.3 | 38.3 | 4.8 | 11.7 | |
| s² | AGE-30 | | | | | | 4.8 | | |
| s³ | EPO-40 | | | | | | 12 | | 6.0 |
| s⁷ | ATMAC | 5.1 | 5.1 | 5.1 | 5.1 | 5.1 | | | 6.0 |
| s⁷ | FDMC | | | | | | | 5.8 | |
| VA-061A | | | | | | | 10.3 | | 5.2 |
| V-59 | | | | | | | | 0.4 | |
| V-601 | | 0.3 | 0.3 | 0.3 | 0.3 | 0.3 | | | |
| StSH | | 0.6 | 0.6 | 0.6 | 0.6 | 0.6 | | | |
| DoSH | | | | | | | 1.2 | 1.1 | 1.2 |
| DPG | | 12.8 | 12.8 | 12.8 | 12.8 | 12.8 | 35.9 | 11.7 | 36.2 |
| Water | | 165.2 | 165.2 | 165.2 | 165.2 | 165.2 | 118.1 | 179.2 | 144.4 |

**TABLE 6**

| Proportion of monomer (mass%) | | Ex. 3 | Ex. 4 | Ex. 5 | Ex. 6 | Ex. 7 | Ex. 8 | Ex. 9 | Ex. 10 |
|---|---|---|---|---|---|---|---|---|---|
| | | (A3) | (A4) | (A5) | (A6) | (A7) | (B1) | (B2) | (B3) |
| (a) | C6FMA | 56.7 | 51.0 | 74.0 | 74.0 | | 90.0 | 90.0 | 90.0 |
| (a) | C4FMA | | | | | 74 | | | |
| (b2) | VCM | | | 9.0 | 9.0 | 9 | 5.0 | 5.0 | |
| (b3) | VdCl | | 20.6 | | | | | | 5.0 |
| (b1) | STA | | 14.4 | 13.0 | | 13 | | | |
| (b1) | VMA | | | | | | 5.0 | | |
| (b1) | VA | 39.3 | | | 13.0 | | | 5.0 | 5.0 |
| (c) | CmFA | | | | | | | | |
| (e) | CHMA | | | | | | | | |
| (e) | DOM | | | | | | | | |
| (d) | GMA | | 2.1 | | | | | | |
| (d) | HEA | | 0.4 | | | | | | |
| (d) | NMAM | | 7.0 | | | | | | |
| (d) | NBMAM | | 4.5 | | | | | | |
| (d) | AT600 | | | | | | | | |
| (d) | D-BI | 4.0 | | 4.0 | 4.0 | 4.0 | | | |
| Solid content (mass%) | | 34.5 | 33.5 | 34.5 | 34.6 | 34.8 | 36.5 | 36.1 | 35.5 |
| Fluorine atom (mass%) | | 32.4 | 29.2 | 42.3 | 42.3 | 38.1 | 51.5 | 51.5 | 51.5 |

**TABLE 7**

| Proportion of monomer (mass%) | | Ex.11 | Ex.12 | Ex.13 | Ex.14 | Ex.15 | Ex.17 | Ex.18 | Ex.19 |
|---|---|---|---|---|---|---|---|---|---|
| | | (B4) | (B5) | (B6) | (B7) | (C1) | (C3) | (D1) | (D2) |
| (a) | C6FMA | 90.0 | 78.7 | 100 | | | | 42.0 | |
| (a) | C4FMA | | | | 90 | | | | |
| (b2) | VCM | | 10 | | 5 | | 21 | | 9.0 |
| (b3) | VdCl | 5.0 | | | | | | | |
| (b1) | STA | | | | | 45 | | | |
| (b1) | VMA | 5.0 | 11.3 | | 5 | | | | |
| (b1) | VA | | | | | | | | 87.0 |
| (c) | CmFA | | | | | 50 | 70 | | |
| (e) | CHMA | | | | | | | 28.0 | |
| (e) | DOM | | | | | | 6 | | |
| (d) | GMA | | | | | 3 | | 30.0 | |
| (d) | HEA | | | | | | | | |
| (d) | NMAM | | | | | | 3 | | |
| (d) | NBMAM | | | | | | | | |
| (d) | AT600 | | | | | 2 | | | |
| (d) | D-BI | | | | | | | | 4.0 |
| Solid content (mass%) | | 36.3 | 36.0 | 34.5 | 34.8 | 36.0 | 34.6 | 33.3 | 33.6 |
| Fluorine atom (mass%) | | 51.5 | 45 | 57.2 | 46.4 | 31.8 | 44.5 | 24.0 | 0 |

### EXAMPLE 21

Preparation of water/oil repellent composition:
The emulsion of polymer (B1) was diluted with distilled water to the solid content concentration of 2 mass%. 3.0 mass% of 2-propanol, 1.0 mass% of DPG, 0.3 mass% of BECKAMINE M-3 (manufactured by Dainippon Ink and Chemicals, Inc.) as a thermosetting agent, and 0.3 mass% of CATALYST ACX (manufactured by Dainippon Ink and Chemicals, Inc.) as a thermosetting catalyst, to 100 mass% of the diluted emulsion, to obtain a water/oil repellent agent. A nylon cloth was dipped in the water/oil repellent composition and nipped to a wet pick-up of 42 mass% with a mangle roller. The cloth was dried at 110°C for 90 seconds, cured at 170°C for 60 seconds, and left in a room at room temperature of 25°C and humidity of 60% overnight to obtain a test cloth. The rainfall test for the test cloth was carried out, and friction durability and wetting friction durability of the test cloth were evaluated. The results are shown in Table 8.

### EXAMPLES 22 to 53

Preparation of water/oil repellent composition:
The rainfall test and evaluation of friction durability and wetting friction durability of the test cloth were carried out in the same manner as in Example 21 except that types of polymers and proportion of each polymer (solid content) in the water/oil repellent composition (diluted emulsion) were changed to the values shown in Table 8. The results are shown in Table 8. The crosslinking agent used in Example 25 to 27 is same one as used in Example 20.

### EXAMPLE 54

Preparation of water/oil repellent composition:
The rainfall test and evaluation of friction durability and wetting friction durability of the test cloth were carried out in the same manner as in Example 37 except that 0.5 mass% of K15 was added to the water/oil repellent composition. The results are shown in Table 8.

### EXAMPLE 55

Preparation of water/oil repellent composition:
The rainfall test and evaluation of friction durability and wetting friction durability of the test cloth were carried out in the same manner as in Example 37 except that 3 mass% of MF-H was added to the water/oil repellent composition. The results are shown in Table 8.

### EXAMPLE 56

Preparation of water/oil repellent composition:
The rainfall test and evaluation of friction durability and wetting friction durability of the test cloth were carried out in the same manner as in Example 37 except that 3 mass% of TP10 was added to the water/oil repellent composition. The results are shown in Table 8.

### EXAMPLE 57

Preparation of water/oil repellent composition:
The rainfall test and evaluation of friction durability and wetting friction durability of the test cloth were carried out in the same manner as in Example 37 except that 1.5 mass% of MF-H and 1.5 mass% of TP10 were added to the water/oil repellent composition. The results are shown in Table 8.

### EXAMPLE 58

Preparation of water/oil repellent composition:
The rainfall test and evaluation of friction durability and wetting friction durability of the test cloth were carried out in the same manner as in Example 37 except that 3 mass% of XAN was added to the water/oil repellent composition. The results are shown in Table 8.

### EXAMPLE 59

Preparation of water/oil repellent composition:
The rainfall test and evaluation of friction durability and wetting friction durability of the test cloth were carried out in the same manner as in Example 37 except that 0.5 mass% of WT30 was added to the water/oil repellent composition. The results are shown in Table 8.

**TABLE 8**

| Ex. | Polymer (A) | | Polymer (B) | | Other ingredient | | Rainfall test | | |
|---|---|---|---|---|---|---|---|---|---|
| | Type | Mass% | Type | Mass% | Type | Mass% | Initial | Wetting friction durability | Friction durability |
| 21 | - | 0 | (B1) | 100 | - | 0 | 3.5 | 1.5 | 2 |
| 22 | (A3) | 100 | - | 0 | - | 0 | 2 | 2 | 2.5 |
| 23 | (A3) | 50 | (B1) | 50 | - | 0 | 4- | 3.5 | 3.5 |
| 24 | (A3) | 50 | - | 0 | (D1) | 50 | 3.5 | 3- | 2.5 |
| 25 | (A4) | 70 | - | 0 | Crosslinking agent | 30 | 3.5 | 1+ | 1.5 |
| 26 | (A4) | 35 | (B1) | 50 | Crosslinking agent | 15 | 4 | 3 | 3+ |
| 27 | (A4) | 49 | (B1) | 30 | Crosslinking agent | 21 | 4 | 3 | 3+ |
| 28 | (A5) | 100 | - | 0 | - | 0 | 2.5 | 1 | 1 |
| 29 | (A5) | 50 | (B1) | 50 | - | 0 | 3.5 | 3 | 3.5 |
| 30 | (A5) | 70 | (B1) | 30 | - | 0 | 3 | 3 | 3 |
| 31 | (A5) | 50 | (B2) | 50 | - | 0 | 3 | 3 | 3 |
| 32 | (A6) | 50 | (B3) | 50 | - | 0 | 3 | 3 | 3 |
| 33 | (A6) | 50 | (B4) | 50 | - | 0 | 3 | 3 | 3 |
| 34 | (A1) | 100 | - | 0 | - | 0 | 3 | 1.5 | 2 |
| 35 | (A1) | 20 | (B1) | 80 | - | 0 | 4 | 4- | 3.5 |
| 36 | (A1) | 30 | (B1) | 70 | - | 0 | 4- | 3 | 3.5 |
| 37 | (A1) | 50 | (B1) | 50 | - | 0 | 4- | 3 | 3.5 |
| 38 | (A1) | 70 | (B1) | 30 | - | 0 | 4 | 4- | 3.5 |
| 39 | (A1) | 50 | (B2) | 50 | - | 0 | 4.5 | 4 | - |
| 40 | (A1) | 50 | (B4) | 50 | - | 0 | 4.5 | 4 | - |
| 41 | (A1) | 50 | (B3) | 50 | - | 0 | 5 | 4 | - |
| 42 | (A1) | 80 | (B5) | 20 | - | 0 | 3.5 | 2 | 3.5 |
| 43 | (A1) | 80 | (B6) | 20 | - | 0 | 3.5 | 2 | 3.5 |
| 44 | (A1) | 90 | (B7) | 10 | - | 0 | 3.5 | 2 | 3.5 |
| 45 | (A1) | 50 | - | 0 | (D2) | 50 | 2 | 1+ | - |
| 46 | - | 0 | (B1) | 50 | (D2) | 50 | 3.5 | 2 | - |
| 47 | (A1) | 50 | - | 0 | (D1) | 50 | 3.5 | 2 | - |
| 48 | (A1) | 49.5 | (B1) | 49.5 | (C3) | 1 | 4.5 | 4 | 3.5 |
| 49 | (A1) | 47.5 | (B1) | 47.5 | (C3) | 5 | 4.5 | 4 | 4- |
| 50 | (A1) | 45 | (B1) | 45 | (C3) | 10 | 4.5 | 4+ | 4 |
| 51 | (A1) | 45 | (B1) | 45 | (C2) | 10 | 3.5 | 3 | 3.5 |
| 52 | (A2) | 80 | (B1) | 15 | (C1) | 5 | 3.5 | 3 | 3 |
| 53 | (A7) | 65 | (B1) | 35 | - | 0 | 3 | 2 | 3 |
| 54 | (A1) | 50 | (B1) | 50 | K15 | (0.5) | 4- | 3 | 3 |
| 55 | (A1) | 50 | (B1) | 50 | MF-H | (3) | 4- | 3 | - |
| 56 | (A1) | 50 | (B1) | 50 | TP-10 | (3) | 4- | 3 | - |
| 57 | (A1) | 50 | (B1) | 50 | TP-10 MF-H | (1.5) (1.5) | 4- | 3 | - |
| 58 | (A1) | 50 | (B1) | 50 | XAN | (3) | 4- | 3.5 | 3 |
| 59 | (A1) | 50 | (B1) | 50 | WT30 | (0.5) | 4- | 3.5 | 3 |

### EXAMPLE 60

Preparation of water/oil repellent composition:
The emulsion of polymer (A3) was diluted with distilled water to a solid content concentration of 1 mass%. 3.0 mass% of 2-propanol, 1.0 mass% of DPG, 0.3 mass%
   of BECKAMINE M-3 as a thermosetting agent and 0.3 mass% of CATALYST ACX as a thermosetting catalyst were added to 100 mass% of the diluted emulsion to obtain a water/oil repellent composition. A nylon cloth was dipped in the water/oil repellent composition and nipped to a wet pick-up of 42 mass% by a mangle roller. This cloth was dried at 110°C for 90 seconds, cured at 170°C for 60 seconds, and left in a room at room temperature of 25°C and humidity of 60% overnight to obtain a test cloth. Water repellency and oil repellency of the test cloth were evaluated. The results are shown in Table 9.
Bundesmann rainfall test of another test cloth obtained by the same method as described above was carried out, and wash durability of the test cloth was evaluated. The results are shown in Table 9.

### EXAMPLE 61

Preparation of water/oil repellent composition:
The rainfall test of the test cloth were carried out, and wash durability of the test cloth was evaluated, in the same manner as in Example 60 except that types of polymers and proportion of each polymer (solid content) in the water/oil repellent composition (diluted emulsion) were changed to the values shown in Table 9. The results are shown in Table 9.

### EXAMPLE 62

Preparation of water/oil repellent composition:
A polyester cloth was dipped in the water/oil repellent composition obtained by the same method as in Example 60 and nipped to a wet pick-up of 70 mass% by a mangle roller. This cloth was dried at 110°C for 90 seconds, cured at 170°C for 60 seconds, and left in a room at room temperature of 25°C and humidity of 60% overnight to obtain a test cloth. Water repellency and oil repellency of the test cloth were evaluated. The results are shown in Table 9.
Bundesmann rainfall test of another test cloth obtained by the same method as described above was carried out, and wash durability of the test cloth was evaluated. The results are shown in Table 9.

### EXAMPLE 63

Preparation of water/oil repellent composition:
The rainfall test and evaluation of wash durability were carried out in the same manner as in Example 62 except that types of polymers and proportion of each polymer (solid content) in the water/oil repellent composition (diluted emulsion) were changed to the values shown in Table 9. The results are shown in Table 9.

**TABLE 9**

| Ex. | cloth | Polymer (A) | | Polymer (B) | | Oil repellency No. | Water repellency level | Bundesmann rainfall test | | |
|---|---|---|---|---|---|---|---|---|---|---|
| | | Type | Mass% | Type | Mass% | | | Initial | Wash durability (P) | Wash durability (D) |
| 60 | Nylon | (A3) | 100 | - | 0 | 6- | 100 | 2.5 | 2 | 2 |
| 61 | Nylon | (A3) | 50 | (B1) | 50 | 6 | 100 | 4 | 3.5 | 3 |
| 62 | Polyester | (A3) | 100 | - | 0 | 6 | 100 | 3 | 2 | 2 |
| 63 | Polyester | (A3) | 50 | (B1) | 50 | 6+ | 100 | 5 | 4.5 | 4 |

### INDUSTRIAL APPLICABILITY

The water/oil repellent composition of the present invention is useful as a water/oil repellent agent for fiber products (clothing items (sportswear, coats, blousons, work clothes, uniforms, etc.), bags, industrial materials, etc.), nonwoven fabrics, leather items, stone materials, concrete building materials, etc. It is also useful as a coating agent for filtering materials used in the presence of an organic solvent or its vapor, a surface-protecting agent, a coating agent for electronics or an antifouling coating agent.
Further, it is useful also for an application to impart water/oil repellency by being mixed with polypropylene, nylon, etc., and then molded and shaped into fibers.

The entire disclosure of Japanese Patent Application No. 2007-254696 filed on September 28, 2007 including specification, claims and summary is incorporated herein by reference in its entirety.

## Claims

1. A water/oil repellent composition which comprises polymer (A) and polymer (B), wherein polymer (A) has structural units based on the following monomer (a) and structural units based on the following monomer (b), has no structural units based on the following monomer (c) and has at least 15 mass% and less than 45 mass% of fluorine atoms in polymer (A) (100 mass%), and polymer (B) has structural units based on the following monomer (a) and has no structural units based on the following monomer (c) and has at least 45 mass% of fluorine atoms in polymer (B) (100 mass%):
monomer (a): a monomer which has a polyfluoroalkyl group having from 4 to 6 carbon atoms to which fluorine atoms are bonded, provided that the polyfluoroalkyl group may have an etheric oxygen atom;
monomer (b): at least one monomer selected from the group consisting of the following monomer (b1), monomer (b2) and monomer (b3):
monomer (b1): a monomer which has no polyfluoroalkyl group and has an alkyl group having at least 12 carbon atoms;
monomer (b2): vinyl chloride; and
monomer (b3): vinylidene chloride; and
monomer (c): a monomer which has a polyfluoroalkyl group having at least 8 carbon atoms to which fluorine atoms are bonded and having at least 60% of hydrogen atoms of the alkyl group substituted by fluorine atoms.

2. The water/oil repellent composition according to Claim 1, wherein the mass ratio of the polymer (A) to the polymer (B) ((A)/(B)) is from 10/90 to 95/5.

3. The water/oil repellent composition according to Claim 1 or 2, wherein the monomer (a) is a (meth)acrylate having a C₄₋₆ perfluoroalkyl group.

4. The water/oil repellent composition according to any one of Claims 1 to 3, wherein the monomer (c) is a (meth)acrylate having a C₈₋₁₆ perfluoroalkyl group.

5. The water/oil repellent composition according to any one of Claims 1 to 4, which further contains polymer (C) having structural units based on the monomer (c) and having at least 15 mass% of fluorine atoms in polymer (C) (100 mass%).

6. The water/oil repellent composition according to Claim 5, wherein the mass ratio of the sum of the polymer (A) and the polymer (B) to the polymer (C) ({(A)+(B)} / (C)) is from 99.9/0.1 to 90/10.

7. The water/oil repellent composition according to any one of Claims 1 to 6, wherein the polymer (A) further has structural units based on the following monomer (d):
monomer (d): a monomer having no polyfluoroalkyl group and having a crosslinkable functional group.

8. The water/oil repellent composition according to Claim 7, wherein the polymer (A) satisfies the following conditions (i) to (iii):
(i) it is a multistage polymer obtained by polymerizing the following monomer component (X1) in a medium in the presence of a surfactant and a polymerization initiator, followed by polymerizing the following monomer component (X2);
monomer component (X1): a monomer component comprising from 65 to 95 mass% of the monomer (a) and from 1 to 35 mass% of the monomer (b1) in monomer component (X1) (100 mass%); and
monomer component (X2): a monomer component comprising from 25 to 80 mass% of the monomer (a) and from 1 to 50 mass% of the monomer (d) in monomer component (X2) (100 mass%);
(ii) the difference between proportion [a₁] (mass%) of the monomer (a) in the monomer component (X1) (100 mass%) and proportion [a₂] (mass%) of the monomer (a) in the monomer component (X2) (100 mass%), i.e. ([a₁] - [a₂]), is at least 10 mass%; and
(iii) the mass ratio of the monomer component (X1) to the monomer component (X2) ((X1)/(X2)) is from 10/90 to 95/5.

9. The water/oil repellent composition according to any one of Claims 1 to 8, wherein the monomer (b1) is stearyl (meth)acrylate or behenyl (meth)acrylate.

10. The water/oil repellent composition according to any one of Claims 1 to 9, which further contains a nonionic surfactant and a cationic surfactant.

11. An article treated with the water/oil repellent composition as defined in any one of Claims 1 to 10.
